# FASCICULE DE BREVET EUROPEEN

(11) **EP 1 346 895 B1**
(45) Date de publication et mention de la délivrance du brevet: **15.12.2004**
(21) Numéro de dépôt: 03005523.0
(22) Date de dépôt: 11.03.2003
(51) Int. Cl.: B60T 13/57

(54) **Servomoteur pneumatique comportant des sièges décalés, des clapets d'admission et de rééquilibrage**
Pneumatischer Servo mit abgesetzten Sitzen, Einlass- und Ausgleichventilen
Pneumatic servo comprising offset seats, valves for inlet and rebalancing

(30) Priorité: 21.03.2002 FR 0203581; 07.01.2003 FR 0300116
(43) Date de publication de la demande: 24.09.2003
(73) Titulaire: ROBERT BOSCH GmbH, 70442 Stuttgart (DE)
(72) Inventeur: Lacroix, Stéphane, 77220 Tournan en Brie (FR); Maligne, Jean-Charles, 93300 Aubervilliers (FR); Verbo, Ulysse, 08190 Sant Cugat (ES); Richard, Philippe, 77500 Chelles (FR)
(74) Mandataire: Hurwic, Aleksander Wiktor

(56) Documents cités:
- DE-A- 19 835 772
- GB-A- 2 157 378
- US-A- 5 651 300

## Description

L'invention concerne un servomoteur pneumatique d'assistance au freinage pour un véhicule automobile.

L'invention concerne plus particulièrement un servomoteur pneumatique d'assistance au freinage pour un véhicule automobile, du type qui comporte une enveloppe rigide à l'intérieur de laquelle est mobile une cloison transversale délimitant de façon étanche une chambre avant, soumise à une première pression, et une chambre arrière, soumise à une deuxième pression variant entre la première pression et une pression supérieure à la première pression, qui est susceptible de solliciter une tige d'actionnement d'un maître cylindre associé au servomoteur par l'intermédiaire d'un disque de réaction, du type qui comporte un piston mobile tubulaire qui est monté coulissant dans l'enveloppe et qui est solidaire de la cloison mobile, du type qui comporte une tige de commande se déplaçant dans le piston sélectivement en fonction d'un effort axial d'entrée exercé vers l'avant à l'encontre d'un effort de rappel exercé sur la tige par un ressort de rappel, du type dans lequel les mouvements de la tige de commande sont susceptibles de déterminer les ouvertures et fermetures d'au moins un clapet axial dit "d'admission" qui est interposé entre une source de pression soumise à la pression supérieure à la première pression et la chambre arrière, et d'au moins un clapet axial dit "de rééquilibrage" qui est interposé entre la chambre avant et la chambre arrière, pour actionner la cloison mobile, et du type dans lequel un plongeur, traversant la cloison mobile et solidaire de l'extrémité de la tige de commande, est susceptible de solliciter directement la tige d'actionnement du maître cylindre par l'intermédiaire du disque de réaction.

On connaît de nombreux exemples de servomoteurs conventionnels de ce type.

Le document US 5 651 300 A divulgue le préambule de la revendication 1.

Dans un tel servomoteur, le piston est solidaire de la paroi mobile. Il est par exemple emboîté au travers de la cloison mobile. Par ailleurs, le clapet de rééquilibrage et le clapet d'admission font partie d'un clapet unique à trois voies dont un siège commun est constitué d'une face avant d'épaulement d'un élément mobile qui est rappelé élastiquement contre une collerette du plongeur et contre une collerette du piston desquelles il est susceptible d'être sélectivement disjoint pour ouvrir le clapet de rééquilibrage ou le clapet d'admission.

Ainsi, un conduit sensiblement radial qui traverse le piston et qui débouche dans la chambre avant et un conduit sensiblement axial qui débouche à l'extérieur du servomoteur sont susceptibles d'être mis sélectivement en communication par l'intermédiaire d'un des clapets avec un conduit radial qui traverse le piston et qui débouche dans la chambre arrière pour maintenir ou annuler une différence de pression entre les chambres arrière et provoquer les déplacements de la cloison mobile.

Une telle conception présente l'inconvénient de nécessiter des conduits réalisés dans le piston suivant des formes complexes, qui perturbent l'écoulement de l'air. De ce fait, un servomoteur réalisé suivant cette conception présente généralement des temps de réponse relativement élevés, et se révèle bruyant.

Par ailleurs, une telle conception est particulièrement onéreuse à mettre en oeuvre, car elle nécessite d'utiliser un piston dont les formes intérieures, destinées à former les conduits, ne peuvent être réalisées que par un procédé d'usinage.

L'invention propose une conception permettant de remédier à ces inconvénients dans laquelle les conduits sont axiaux et font partie de différents éléments tubulaires du servomoteur. Cette conception permet de favoriser l'écoulement de l'air au travers de clapets, ce qui permet de réduire les temps de réponse du servomoteur tout en lui garantissant un fonctionnement silencieux. De surcroît, cette nouvelle conception permet de réaliser la plupart des éléments du servomoteur à l'aide d'un procédé d'emboutissage, moins onéreux que les procédés d'usinage conventionnels.

Dans ce but, l'invention propose un servomoteur du type décrit précédemment, caractérisé en ce qu'il comporte :
- un élément tubulaire flottant, extérieur au plongeur, qui est mobile axialement et qui est rappelé élastiquement vers la cloison mobile, dont des faces transversales décalées axialement comportent des premiers éléments d'étanchéité des clapets axiaux d'admission et de rééquilibrage,
- un second élément transversal complémentaire d'étanchéité du clapet axial d'admission, porté par l'extrémité arrière du plongeur,
- un second élément transversal complémentaire d'étanchéité du clapet axial de rééquilibrage, constitué d'au moins une portion de la face arrière de la cloison mobile.

Selon d'autres caractéristiques de l'invention :
- au moins un premier élément d'étanchéité est constitué d'un joint qui est porté par une douille tubulaire rapportée qui est montée glissante dans l'élément tubulaire flottant,
- l'élément tubulaire flottant comporte:
   - un tronçon intermédiaire tubulaire, qui est monté coulissant dans un tronçon intermédiaire du piston sensiblement cylindrique et autour d'une portée tubulaire de la cloison mobile qui reçoit en coulissement le plongeur,
   - un tronçon tubulaire d'extrémité avant, d'un diamètre supérieur au diamètre du tronçon intermédiaire, qui est reçu dans un tronçon avant ajouré du piston agencé à la jonction du piston et de la cloison mobile, qui reçoit intérieurement un joint dont une face avant forme le premier élément d'étanchéité du clapet de rééquilibrage, et qui est destiné à coopérer avec la portion de la face arrière de la cloison mobile, formant le second élément d'étanchéité du clapet de rééquilibrage, qui est agencée radialement à l'extérieur d'au moins un perçage de communication entre la chambre avant et la chambre arrière,
   - un tronçon tubulaire d'extrémité arrière, d'un diamètre inférieur au diamètre du tronçon intermédiaire, qui reçoit intérieurement la douille tubulaire dont une face transversale d'extrémité avant porte un joint, formant le premier élément d'étanchéité du clapet d'admission qui est destiné à coopérer le second élément d'étanchéité porté par le plongeur, et dont un alésage entoure de manière étanche un conduit axial d'admission du piston communiquant avec la source de pression soumise à la pression supérieure à la première pression.
- le plongeur est guidé dans une portée tubulaire qui s'étend axialement à partir de la face arrière de la cloison mobile et la cloison mobile comporte une pluralité de perçages répartis angulairement au travers de la cloison transversale autour de la jonction de sa portée tubulaire et de sa face arrière,
- une face d'épaulement délimitant le tronçon tubulaire intermédiaire et le tronçon tubulaire de l'élément tubulaire reçoit en appui l'extrémité d'un ressort de rappel dont l'autre extrémité est en appui sur une face d'épaulement du piston tubulaire,
- une goupille radiale de butée, dont les extrémités extérieures au piston sont susceptibles de prendre appui sur l'enveloppe du servomoteur, traverse un perçage du plongeur, deux lumières diamétralement opposées de la portée tubulaire de la cloison mobile, deux lumières diamétralement opposées de l'élément, et deux lumières diamétralement opposées du piston,
- les lumières diamétralement opposées du piston font partie des ajourements du piston,
- le tronçon intermédiaire du piston, d'un diamètre déterminé, comporte le conduit d'admission, d'un diamètre inférieur au diamètre déterminé, avec lequel il est venu de matière, et le conduit d'admission est lié au tronçon intermédiaire par l'intermédiaire d'une paroi transversale venue de matière dont une face avant forme la face d'épaulement recevant en appui le ressort de rappel de l'élément tubulaire et dont la face arrière forme une face d'épaulement recevant en appui le ressort de rappel de la tige de commande,
- le second élément transversal d'étanchéité du clapet axial d'admission est porté par une coupelle qui est montée serrée sur l'extrémité arrière du plongeur cylindrique et dont une face arrière transversale s'étend en regard du joint formant le premier élément transversal d'étanchéité,
- la cloison mobile, l'élément tubulaire flottant, la douille tubulaire solidaire de l'élément tubulaire flottant, le piston, et la coupelle solidaire du plongeur sont réalisés par des procédés de découpe et d'emboutissage.
- un ressort de rappel est interposé axialement dans l'élément tubulaire flottant entre le plongeur et le tronçon arrière du piston tubulaire pour exercer un effort de rappel sur la tige de commande.
- le clapet axial d'admission est agencé à l'extrémité d'une chambre intérieure du piston tubulaire qui est formée dans le tronçon arrière du piston et qui communique radialement avec la chambre arrière, le premier élément transversal d'étanchéité du clapet axial d'admission entourant un conduit d'admission axial qui est formé dans l'élément tubulaire flottant et qui communique avec le milieu extérieur et le second élément transversal complémentaire d'étanchéité du clapet axial d'admission étant reçu avec jeu dans un perçage axial du piston communiquant avec la chambre intérieure,
- le clapet axial de rééquilibrage est agencé à l'extérieur du piston tubulaire et il est agencé radialement à l'extérieur d'au moins un conduit de rééquilibrage du piston tubulaire mettant en communication la chambre avant et la chambre arrière,
- l'élément tubulaire flottant comporte :
   - un tronçon tubulaire avant, monté coulissant sur le tronçon arrière du piston, qui porte le premier élément d'étanchéité du clapet de rééquilibrage, et qui est destiné à coopérer avec le second élément d'étanchéité du clapet de rééquilibrage porté par la portion de la face arrière du tronçon avant du piston, les premier et second éléments d'étanchéité du clapet de rééquilibrage étant agencés radialement au moins en partie à l'extérieur d'au moins un perçage de communication entre la chambre avant et la chambre arrière qui traverse le tronçon avant du piston,
   - un tronçon tubulaire intermédiaire, qui est monté coulissant sur le tronçon arrière du piston, et dont au moins une lumière longitudinale est agencée radialement au droit d'au moins une lumière longitudinale du tronçon arrière du piston qui permet la communication entre la chambre intérieure du piston et la chambre arrière,
   - un tronçon tubulaire arrière, d'un diamètre inférieur au diamètre du tronçon intermédiaire, qui forme le conduit communiquant avec le milieu extérieur et qui est monté coulissant sur au moins un tronçon tubulaire arrière du plongeur traversé par la tige de commande,
   et une paroi transversale de jonction entre les tronçons intermédiaire et arrière de l'élément tubulaire, agencée sensiblement axialement à proximité du perçage d'extrémité du tronçon tubulaire arrière du piston, comporte le premier élément d'étanchéité du clapet axial d'admission qui est destiné à coopérer avec le second élément d'étanchéité du clapet axial d'admission qui est porte par le plongeur et qui est reçu dans ledit perçage d'extrémité du tronçon tubulaire arrière du piston,
- le premier élément d'étanchéité du clapet axial d'admission est constitué d'une partie annulaire face avant de la paroi transversale de jonction entre les tronçons intermédiaire et arrière de l'élément tubulaire,
- le second élément transversal complémentaire d'étanchéité du clapet axial d'admission est constitué d'un joint annulaire qui est porté par une face arrière annulaire d'une coupelle qui est portée par le plongeur et qui est reçue avec jeu dans le perçage d'extrémité de la chambre du piston tubulaire,
- le premier élément d'étanchéité du clapet axial de rééquilibrage est constitué d'un joint annulaire qui est reçu dans une gorge pratiquée dans la face avant du tronçon tubulaire d'extrémité avant de l'élément tubulaire,
- le second élément transversal complémentaire d'étanchéité du clapet axial de rééquilibrage est constitué d'une portion annulaire de la face arrière délimitant les tronçons avant et arrière du piston tubulaire,
- le servomoteur comporte une pluralité des perçages qui sont répartis angulairement de manière régulière au travers du tronçon avant du piston et qui débouchent dans la face arrière délimitant les tronçons avant et arrière du piston tubulaire pour former les conduits de rééquilibrage,
- le corps du piston comporte un alésage axial interne, qui débouche dans la face avant du piston et dans la chambre intérieure du piston, et qui reçoit :
   - l'extrémité de la tige d'actionnement du maître cylindre,
   - le disque de réaction,
   - une douille coulissante, traversée par un tronçon avant du plongeur, dont un épaulement comporte une face avant, qui est coaxiale à un palpeur formé à l'extrémité avant du plongeur, pour solliciter le disque de réaction,
- une paroi transversale, formée à l'extrémité de l'alésage axial interne, forme d'un côté une butée pour l'épaulement de la douille et reçoit du côté opposé l'extrémité du ressort de rappel dont l'autre extrémité est en appui sur une face avant de la coupelle du plongeur,
- une face d'épaulement délimitant le tronçon avant et le tronçon intermédiaire de l'élément tubulaire reçoit en appui l'extrémité d'un ressort de rappel dont l'autre extrémité est en appui sur une face d'épaulement de l'enveloppe,
- la coupelle est interposée axialement entre les tronçons arrière et avant du plongeur avec lesquels elle est venue de matière,
- un joint annulaire est interposé entre un tronçon tubulaire arrière de l'enveloppe et le tronçon tubulaire arrière de l'élément tubulaire flottant pour assurer l'étanchéité entre le milieu extérieur et la chambre arrière du servomoteur,
- le tronçon intermédiaire de l'élément tubulaire flottant comporte une pluralité de lumières longitudinales agencées chacune au droit de lumières longitudinales du tronçon arrière du piston, et le tronçon tubulaire intermédiaire de l'élément tubulaire flottant comporte au moins un doigt d'immobilisation en rotation qui est monté coulissant dans au moins une desdites lumières du tronçon arrière du piston,
- au moins un élément parmi la cloison mobile, l'élément tubulaire flottant, la douille intermédiaire, le plongeur et le piston, est réalisé par des procédés de découpe et d'emboutissage,
- au moins un élément parmi la cloison mobile, l'élément tubulaire flottant, la douille intermédiaire, le plongeur et le piston, est réalisé par un procédé de moulage d'un matériau plastique.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'ensemble d'un servofrein comportant un servomoteur pneumatique d'assistance au freinage réalisé conformément à un état antérieur de la technique ;
- la figure 2 est une vue de détail du servomoteur de la figure 1 ;
- la figure 3 est une vue en perspective des éléments internes à l'enveloppe d'un servomoteur selon un premier mode de réalisation de la présente invention,
- la figure 4 est une vue de détail en coupe axiale d'un servomoteur réalisé conformément au premier mode de réalisation de la présente invention, le plongeur étant en repos, le clapet de rééquilibrage étant ouvert et le clapet d'admission étant fermé,
- la figure 5 est une vue de détail en coupe axiale d'un servomoteur réalisé conformément au premier mode de réalisation de la présente invention, le plongeur étant actionné et le clapet de rééquilibrage et le clapet d'admission étant fermés,
- la figure 6 est une vue de détail en coupe axiale d'un servomoteur réalisé conformément au premier mode de réalisation de la présente invention, le plongeur étant actionné, le clapet de rééquilibrage étant fermé et le clapet d'admission étant ouvert,
- la figure 7 est une vue de détail en coupe axiale d'un servomoteur réalisé conformément à l'invention, le plongeur étant relâché, le clapet de rééquilibrage étant rouvert et le clapet d'admission étant refermé,
- la figure 8 est une vue de détail en coupe axiale d'un servomoteur réalisé conformément à un deuxième mode de réalisation de la présente invention vu dans une position de repos, le plongeur étant en repos, le clapet de rééquilibrage étant fermé et le clapet d'admission étant fermé ;
- la figure 9 est une vue de détail en coupe axiale d'un servomoteur réalisé au deuxième mode de réalisation de la présente invention vu dans une position d'équilibre, le plongeur étant actionné, le clapet de rééquilibrage étant fermé et le clapet d'admission étant fermé ;
- la figure 10 est une vue de détail en coupe axiale d'un servomoteur réalisé conformément au dauxième mode de réalisation de la présente invention vu dans une position de saturation, le plongeur étant actionné, le clapet de rééquilibrage étant fermé et le clapet d'admission étant ouvert ;
- la figure 11 est une vue de détail en coupe axiale d'un servomoteur réalisé conformément au deuxième mode de réalisation de la présente invention l'invention vu dans une position de retour, le plongeur étant relâché, le clapet de rééquilibrage étant ouvert et le clapet d'admission étant refermé.

Dans la description qui va suivre, des chiffres de référence identiques désignent des pièces identiques ou ayant des fonctions similaires.

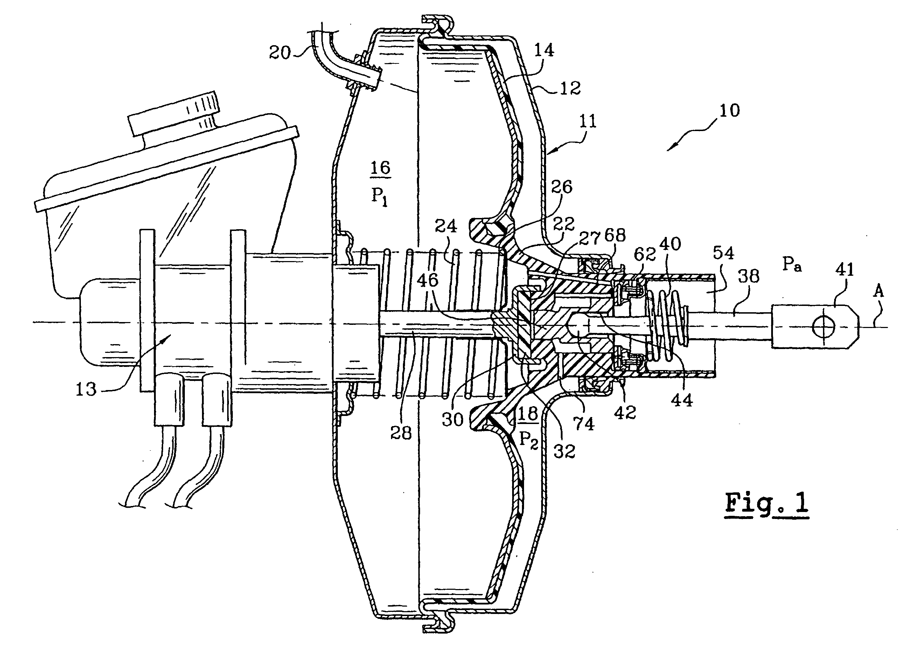

Par convention, les termes "avant", "arrière", supérieur", "inférieur" désignent respectivement des éléments ou des positions orientés respectivement vers la gauche, la droite, le haut, ou le bas des figures 1 à 11.

On a représenté à la figure 1 l'ensemble d'un servofrein 10 comportant un servomoteur 11 pneumatique conventionnel d'assistance au freinage pour un véhicule automobile. Le servomoteur 11 est destiné à actionner un maître-cylindre 13 de freinage du véhicule.

De manière connue, le servomoteur pneumatique 10 comporte une enveloppe rigide 12 à l'intérieur de laquelle est montée mobile une cloison 14 transversale qui délimite de façon étanche une chambre avant 16, soumise à une première pression "P₁", et une chambre arrière 18 soumise à une deuxième pression "P₂". La deuxième pression "P₂" est susceptible de varier entre la valeur de la pression "P₁" et la valeur d'une pression "Pₐ" supérieure à la pression "P₁" pour provoquer les déplacements de la cloison 14, qui est susceptible de solliciter, comme on le verra ultérieurement une tige 28 d'actionnement du maître-cylindre 13.

Plus particulièrement, la pression "P₁" correspond notamment à une pression fournie par une source de dépression du véhicule. Dans le cas d'un moteur à allumage commandé, la pression de dépression "P₁" est par exemple fournie par un collecteur d'admission du moteur du véhicule et, dans le cas d'un moteur à allumage par compression de type "diesel", la pression de dépression "P₁" est par exemple fournie par une pompe à vide du véhicule.

La chambre avant 16 est reliée à la source de dépression du véhicule par l'intermédiaire d'un conduit 20 de dépression qui débouche dans l'enveloppe 12.

Le servomoteur pneumatique 11 comporte un piston mobile 22 d'axe A qui est solidaire de la cloison mobile 14. Par exemple, le piston mobile 22 est emboîté au travers de la cloison mobile 14.

A l'intérieur de l'enveloppe 12, la cloison mobile 14 est rappelée élastiquement vers l'arrière par un ressort 24 de rappel qui prend appui sur l'enveloppe 12 et sur une face avant 26 du piston mobile 22. La face avant 26 du piston mobile 22 comporte une portée cylindrique avant 27, qui est agencée en regard d'un disque 32 de réaction en réaction qui est logé dans une coupelle 30 solidaire de la tige 28 d'actionnement du maître-cylindre 13.

Une tige 38 de commande, qui est par exemple reliée à une pédale de frein du véhicule par l'intermédiaire d'un manchon 41 d'accouplement, est susceptible de se déplacer dans le piston mobile 22, sélectivement en fonction d'un effort axial d'entrée exercé vers l'avant sur le manchon 41. L'effort d'actionnement est exercé à l'encontre d'un effort de rappel produit sur la tige 38 par un ressort de rappel 40 qui est interposé entre le piston mobile 22 et la tige 38 de commande.

L'extrémité avant de la tige 38 de commande qui est opposée au manchon 41 est conformée en rotule 42 et est reçue dans un logement 44 complémentaire d'un plongeur 46 sensiblement cylindrique qui est monté coulissant dans le piston mobile 22.

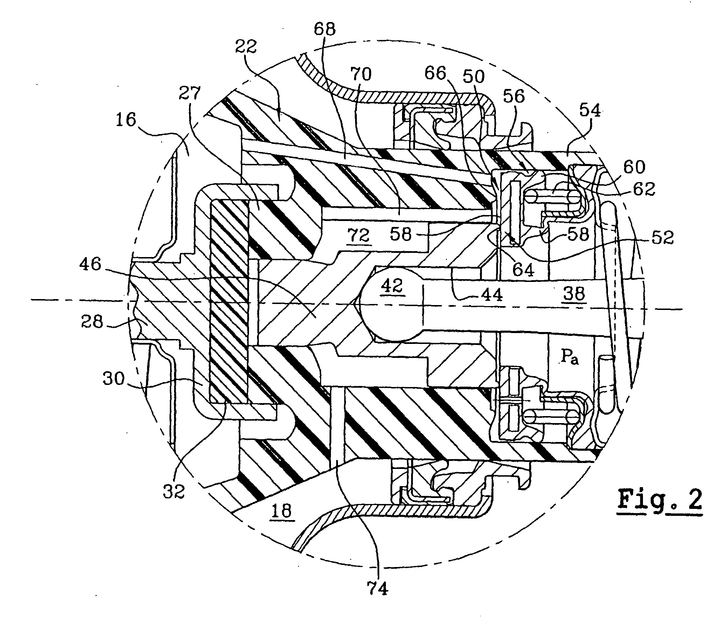

Comme l'illustre plus particulièrement la figure 2, les mouvements de la tige 38 de commande sont susceptibles de déterminer les ouvertures et fermetures d'au moins un clapet 52 axial dit "d'admission" qui est interposé entre une source de pression soumise à la pression "Pₐ" supérieure à la première pression "P₁" et la chambre 18 arrière, et d'au moins un clapet 50 axial dit "de rééquilibrage" qui est interposé entre la chambre 16 avant et la chambre 18 arrière, pour actionner la cloison mobile précédemment décrite.

De manière connue, et de manière non limitative de l'invention, la source de pression soumise à la pression "Pₐ" correspond au milieu atmosphérique ambiant. A cet effet, le clapet 50 débouche directement dans une extrémité arrière 54 du corps du piston 22 formant un conduit axial qui est ouvert à l'air libre.

De manière conventionnelle, le clapet 50 de rééquilibrage et le clapet 52 d'admission font partie d'un clapet 56 unique à trois voies dont un siège commun 58 est constitué d'une face avant d'épaulement d'un élément 60 annulaire mobile rappelé élastiquement par un ressort 62 contre une collerette 64 du plongeur 46 et contre une collerette 66 du piston 22.

Ainsi, un conduit 68 sensiblement radial qui traverse le piston 22 et qui débouche dans la chambre avant 16, ou bien le conduit 54 sensiblement axial qui débouche à l'extérieur du servomoteur 11, sont susceptibles d'être mis sélectivement en communication, par l'intermédiaire d'un alésage 72 de guidage du plongeur et d'une rainure 70 formée dans cet alésage, avec un conduit radial 74 qui traverse le piston 22 et qui débouche dans la chambre arrière 18 pour maintenir ou annuler une différence de pression entre les chambres avant 16 et arrière 18 et provoquer ainsi les déplacements de la cloison mobile 14.

Une telle conception est particulièrement onéreuse à mettre en oeuvre, car elle nécessite d'utiliser un piston dont les formes intérieures, destinées à former les conduits 68 et 74, ne peuvent être réalisées que par un procédé d'usinage.

Pour remédier à cet inconvénient, l'invention propose un servomoteur 11 du type décrit précédemment dans lequel les conduits d'admission et de rééquilibrage sont formés dans des éléments tubulaires du servomoteur 11.

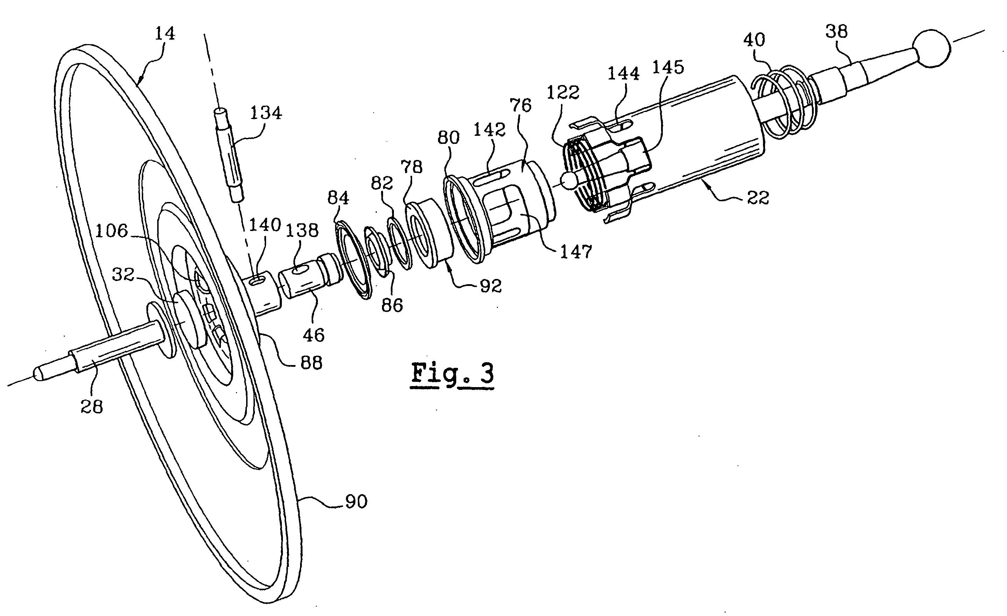

A cet effet, comme l'illustrent les figures 3 à 7, le servomoteur 11 comporte selon un premier mode de réalisation :
- un élément 76 tubulaire flottant, extérieur au plongeur 46, qui est mobile axialement et qui est rappelé élastiquement vers la cloison mobile, dont des faces transversales 78, 80 décalées axialement comportent respectivement des premiers éléments 82, 84 d'étanchéité des clapets axiaux d'admission 52 et de rééquilibrage 50,
- un second élément 86 transversal complémentaire d'étanchéité du clapet axial d'admission 52, porté par l'extrémité arrière du plongeur 46,
- un second élément 88 transversal complémentaire d'étanchéité du clapet axial de rééquilibrage 50, constitué d'au moins une portion de la face arrière 90 de la cloison mobile.

Conformément à l'invention, au moins un premier élément d'étanchéité est constitué d'un joint qui est porté par une douille 92 tubulaire rapportée qui est montée glissante dans l'élément tubulaire 76 flottant. Dans le mode de réalisation préféré de l'invention, ce premier élément d'étanchéité est le premier élément d'étanchéité 82 du clapet axial d'admission et la douille 92 est montée glissante dans l'extrémité arrière de l'élément tubulaire 76.

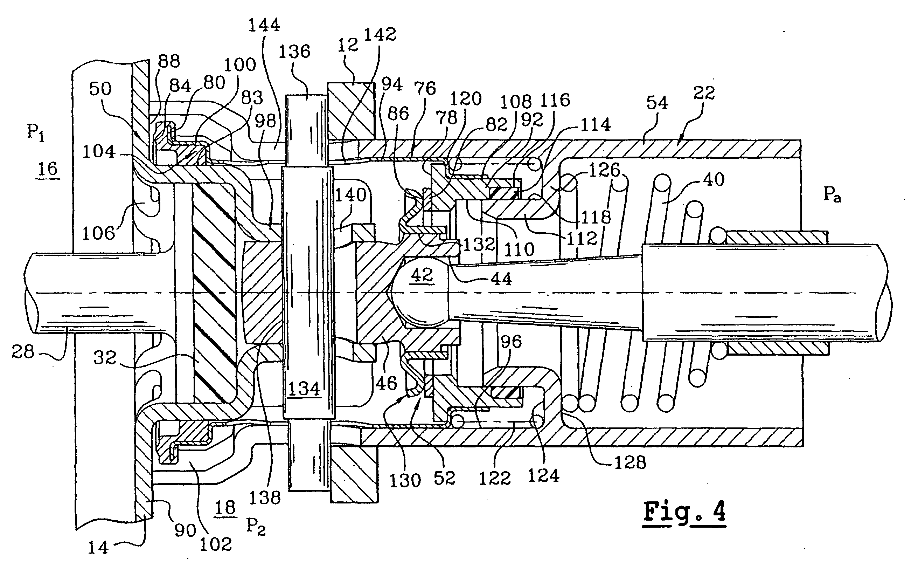

Plus particulièrement, comme l'illustrent les figures 4 à 7, l'élément tubulaire flottant 76 comporte un tronçon intermédiaire 94 tubulaire, qui est monté coulissant dans un tronçon intermédiaire 96 du piston 22 sensiblement cylindrique et autour d'une portée tubulaire 98 de la cloison mobile qui reçoit en coulissement le plongeur 46. La portée tubulaire 98 s'étend axialement à partir de la face arrière 90 de la cloison mobile 14.

L'élément tubulaire flottant 76 comporte aussi un tronçon tubulaire 100 d'extrémité avant, d'un diamètre supérieur au diamètre du tronçon 94 intermédiaire, qui est reçu dans un tronçon avant 102 ajouré du piston 22 agencé à la jonction du piston 22 et de la cloison mobile. Le tronçon avant 102 reçoit intérieurement un joint 104 dont une face avant forme le premier élément d'étanchéité 84 du clapet de rééquilibrage 50. La face avant 84 du joint 104 est destinée à coopérer avec la portion 88 de la face arrière 90 de la cloison mobile 14, formant le second élément d'étanchéité du clapet de rééquilibrage 50, qui est agencée radialement à l'extérieur d'au moins un perçage 106 de communication entre la chambre avant 16 et la chambre arrière 18, pour interrompre la communication entre les chambres avant 16 et arrière 18. Par ailleurs, une portée intérieure 83 du joint 104 coulisse au contact de la portée tubulaire 98 de la cloison mobile pour n'autoriser le passage de l'air qu'entre la face avant 84 du joint 104 et la portion 88 de la face arrière 90 de la cloison mobile 14.

A cet effet, la cloison mobile 14 comporte une pluralité de perçages 106 qui sont répartis angulairement de manière régulière au travers de la cloison transversale 14, et qui débouchent sensiblement autour de la jonction de la portée tubulaire 98 et de la face arrière 90.

L'élément tubulaire flottant 76 comporte enfin un tronçon tubulaire 108 d'extrémité arrière, d'un diamètre inférieur au diamètre du tronçon 94 intermédiaire, qui reçoit intérieurement la douille 92 tubulaire dont la face transversale d'extrémité avant 78 porte le joint 82, formant le premier élément d'étanchéité du clapet 52 d'admission, qui est destiné à coopérer avec le second élément d'étanchéité 86 porté par le plongeur 46. Un alésage 110 de la douille 92 entoure de manière étanche un conduit axial 112 d'admission du piston 22 communiquant avec la source de pression soumise à la pression "Pₐ" supérieure à la première pression "P₁".

On remarquera qu'à l'effet d'obtenir une étanchéité satisfaisante, l'extrémité arrière de la douille 92 comporte une gorge interne 116 dans laquelle est reçue un joint 114 qui est agencé au contact de la périphérie 118 externe du conduit 112.

Avantageusement, pour assurer le rappel élastique de l'élément 76 vers le cloison mobile 14, une face 120 d'épaulement délimitant le tronçon 94 tubulaire intermédiaire et le tronçon 108 tubulaire d'extrémité arrière de l'élément tubulaire reçoit en appui l'extrémité d'un ressort 122 de rappel dont l'autre extrémité est en appui sur une face 124 d'épaulement du piston tubulaire 22.

Dans le mode de réalisation préféré de l'invention, le tronçon 96 intermédiaire du piston 22, d'un diamètre déterminé, comporte le conduit d'admission 112, d'un diamètre inférieur au diamètre déterminé, avec lequel il est venu de matière, et le conduit d'admission 112 est lié au tronçon intermédiaire 96 par l'intermédiaire d'une paroi transversale 126 venue de matière dont une face avant forme la face 124 d'épaulement recevant en appui le ressort 122 de rappel de l'élément tubulaire et dont la face arrière forme une face d'épaulement 128 recevant en appui le ressort de rappel 40 de la tige 38 de commande.

Avantageusement, le rappel en butée du plongeur 46 dans sa position de repos est assuré par une goupille 134 radiale de butée, dont les extrémités 136 extérieures au piston 22 sont susceptibles de prendre appui sur l'enveloppe 12 du servomoteur. La goupille 134 traverse un perçage 138 du plongeur 46, deux lumières 140 diamétralement opposées de la portée 98 tubulaire de la cloison mobile 14, deux lumières 142 diamétralement opposées de l'élément 76, et deux lumières 144 diamétralement opposées du piston 22.

Avantageusement, les lumières 144 diamétralement opposées du piston 22 font partie des ajourements du piston 22, qui permettent le passage de l'air de la chambre avant 16 vers la chambre arrière 18 lorsque le clapet 50 de rééquilibrage est ouvert, ou le passage de l'air du milieu extérieur en provenance du conduit 112 lorsque le clapet d'admission 52 est ouvert.

Il sera compris que les ajourements du piston 22, et que le tronçon avant 102 du piston 22 peut comporter des lumières supplémentaires, par exemple des lumières 145 telles que représentées à la figure 3.

D'une manière plus générale, l'élément 76 peut aussi comporter des lumières 147 supplémentaires de communication avec la chambre arrière 18, comme représenté à la figure 3.

Le second élément 86 transversal d'étanchéité du clapet axial d'admission est constitué d'une face arrière d'une coupelle 130 qui est montée serrée sur l'extrémité arrière 132 du plongeur cylindrique 46. La face arrière 86 transversale de la coupelle s'étend en regard du joint 82 formant le premier élément transversal d'étanchéité.

L'un des avantages principaux de l'invention est que, du fait des formes cylindriques ou tubulaires de la cloison mobile 14, de l'élément tubulaire 76 flottant, de la douille 92 tubulaire qui est montée glissante dans l'élément 76 tubulaire flottant et maintenue à son contact par l'action du ressort 122, du piston 22, et de la coupelle 130 solidaire du plongeur 46, l'écoulement de l'air est favorisé au travers de clapets, ce qui permet de réduire les temps de réponse du servomoteur 11 tout en lui garantissant un fonctionnement silencieux.

Par ailleurs, tous ces éléments peuvent être réalisés par des procédés de découpe et d'emboutissage. Cette configuration est particulièrement avantageuse car elle permet de réaliser le servomoteur 11 avec des coûts de fabrication réduits.

Dans cette configuration, les éléments internes du servomoteur 11 sont susceptibles d'occuper quatre configurations différentes qui ont été représentées aux figures 4 à 7.

Comme l'illustre la figure 4, la tige de commande 38 est susceptible d'occuper une position de repos. Dans cette position, le clapet 52 d'admission d'air est fermé et le clapet 50 de rééquilibrage est ouvert, de sorte que les chambres avant 16 et arrière 18 sont soumises à la même pression "P₁". La cloison mobile est donc immobile. Le piston 22 est maintenu dans sa position de repos par la goupille 134 qui est en appui sur l'enveloppe 12.

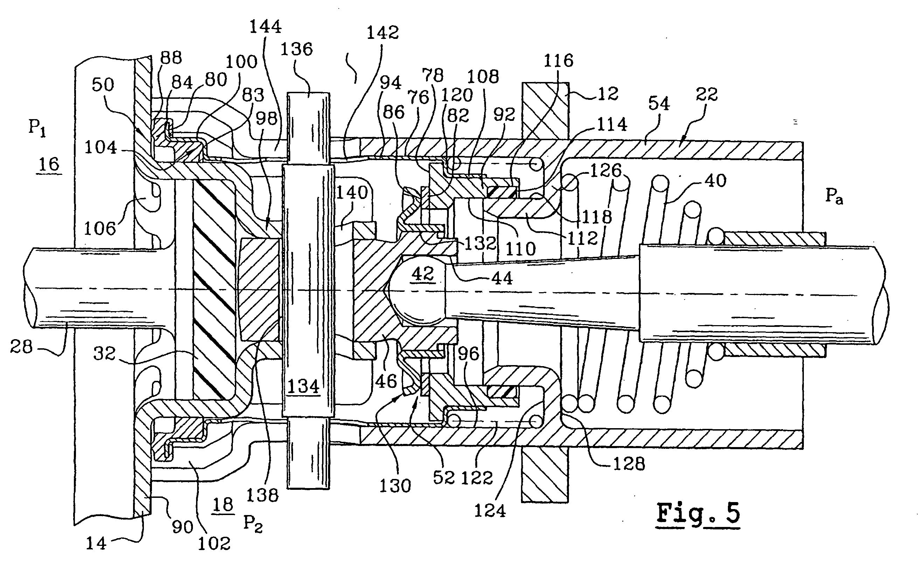

A partir de cette position, une avancée de la tige de commande 38 provoque l'avancée du plongeur 46 et de la coupelle 86 qui y est liée, comme représenté à la figure 5. En avançant, le plongeur 46 ne s'oppose plus à l'avancée de la douille 92 et de l'élément tubulaire 76, qui est alors rappelé vers la cloison mobile 14 par l'intermédiaire du ressort 122 de rappel. Durant l'avancée de l'élément 76, le clapet d'admission 52 demeure fermé car le joint 82 demeure au contact de la face arrière 86 de la coupelle 130 solidaire du plongeur 46. Puis, l'avancée de l'élément tubulaire 76 provoque la fermeture du clapet 50 de rééquilibrage et isole ainsi la chambre avant 16 de la chambre arrière 18 dès lors que la face avant 84 du joint 104 entre en contact avec la portion 88 de la face arrière 90 de la cloison mobile 14. Le piston 22, repoussé par la tige de commande 38 et par le ressort de rappel 40 est maintenu en appui sur la face 90 de la cloison mobile 14.

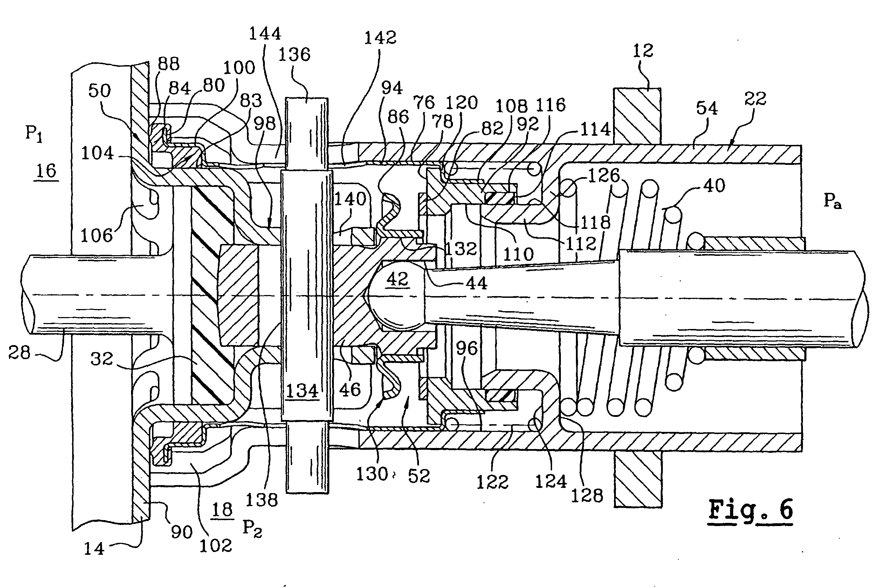

Puis, comme représenté à la figure 6, l'avancée de la tige 38 de commande se poursuivant, le plongeur 46 avance en entraînant la coupelle 130 dont la face 86 se décolle du joint 82, ce qui provoque l'ouverture du clapet d'admission 52. L'air à la pression atmosphérique "Pₐ" pénètre dans la chambre arrière 18, ce qui a pour effet de créer une différence de pression de part et d'autre de la cloison mobile 14, et donc de provoquer l'avancée de la cloison 14. Le piston 22 poursuit son avancée avec l'assistance de l'effort exercé sur la cloison mobile 14 et la goupille 134 quitte son appui sur l'enveloppe 12 du servomoteur 11..

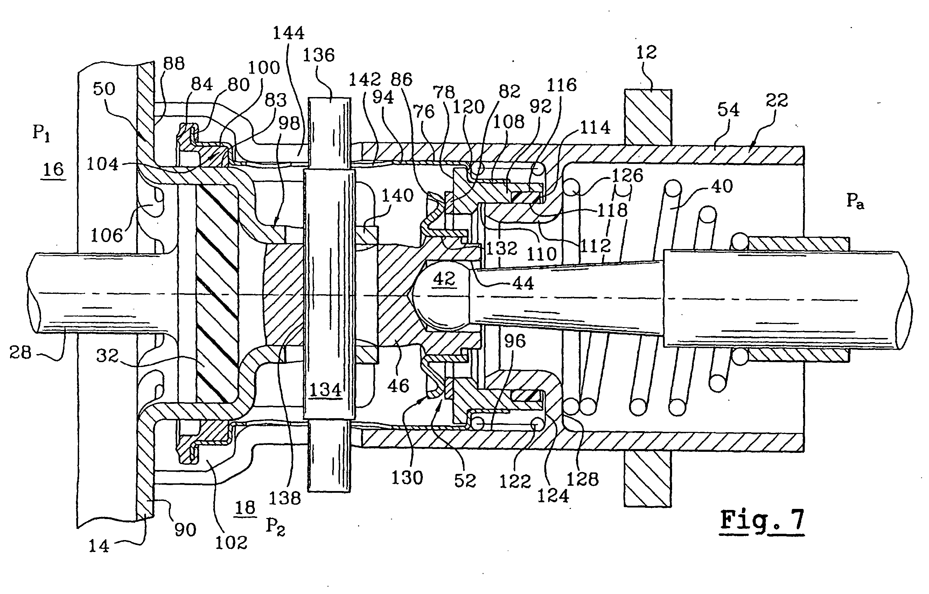

Si la tige de commande est relâchée comme représenté à la figure 7, le mouvement inverse du plongeur 46 provoque d'abord la fermeture du clapet d'admission 52 puis la ré-ouverture du clapet de rééquilibrage 50. L'air à la pression atmosphérique "Pₐ" contenue dans la chambre de pression arrière 18 est évacué dans la chambre de pression 14 avant soumise à la pression de dépression "P₁".

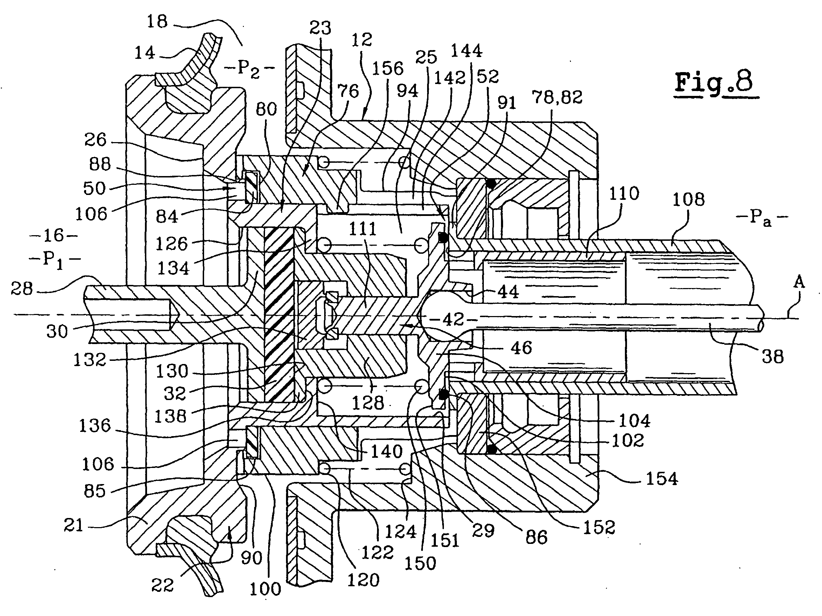

Les figures 8 à 11 illustrent un deuxième de mode de réalisation d'un servomoteur 11 selon la présente invention comportant :
- un élément 76 tubulaire flottant, qui est monté coulissant sur un tronçon arrière 23 du piston 22 tubulaire et qui est rappelé élastiquement vers la cloison mobile 14, dont une face 78 transversale comporte un premier élément 82 transversal d'étanchéité du clapet 52 axial d'admission et dont une autre face 80 transversale décalée comporte un premier élément 84 transversal d'étanchéité du clapet axial 50 de rééquilibrage,
- un second élément 86 transversal complémentaire d'étanchéité du clapet 52 axial d'admission, porté le plongeur 46, et
- un second élément 88 transversal complémentaire d'étanchéité du clapet 50 axial de rééquilibrage, constitué d'au moins une portion de la face 90 délimitant les tronçons 21 avant et 23 arrière du piston 22,
et en ce qu'il comporte un ressort 150 de rappel interposé axialement dans l'élément 76 tubulaire flottant entre le plongeur 46 et le tronçon arrière 23 du piston 22 tubulaire pour exercer un effort de rappel sur la tige 38 de commande.

Le clapet 52 axial d'admission est agencé à l'extrémité arrière d'une chambre intérieure 25 du piston tubulaire 22 qui est formée dans le tronçon arrière 23 du piston 22 et qui communique radialement avec la chambre arrière 18, le premier élément 82 transversal d'étanchéité du clapet 52 axial d'admission entourant un conduit 108 d'admission axial qui est formé dans l'élément 76 tubulaire flottant et qui communique avec le milieu extérieur à la pression "Pₐ", et le second élément 86 transversal complémentaire d'étanchéité du clapet 52 axial d'admission étant reçu avec jeu dans un perçage axial 29 du piston 22 communiquant avec la chambre intérieure 25.

Le clapet axial 50 de rééquilibrage est, quant à lui, agencé à l'extérieur du piston 22 tubulaire. Il est agencé radialement à l'extérieur d'au moins un conduit 106 de rééquilibrage du piston tubulaire 22 qui met en communication la chambre avant 16 et la chambre arrière 18.

Plus particulièrement, l'élément tubulaire 76 flottant comporte un tronçon 100 tubulaire avant, qui est monté coulissant sur le tronçon arrière 23 du piston 22. Le tronçon 100 tubulaire avant porte à son extrémité libre avant le premier élément 84 d'étanchéité du clapet 50 de rééquilibrage, qui est destiné à coopérer avec le second élément d'étanchéité 88 du clapet 50 de rééquilibrage porté par la portion de la face arrière 90 du tronçon avant 21 du piston 22. Pour former la clapet 50 de rééquilibrage, les premier et second éléments 84, 88 d'étanchéité du clapet 50 de rééquilibrage sont agencés radialement au moins en partie à l'extérieur d'au moins un perçage 106 de communication entre la chambre 16 avant et la chambre 18 arrière qui traverse le tronçon avant 21 du piston 22.

L'élément tubulaire 76 flottant comporte aussi un tronçon 94 intermédiaire tubulaire, qui est monté coulissant sur le tronçon 23 arrière du piston 22, et dont au moins une lumière 142 longitudinale est agencée radialement au droit d'au moins une lumière 144 longitudinale du tronçon arrière 23 du piston 22 qui permet la communication entre la chambre intérieure 25 du piston 22 et la chambre arrière 18.

Pour garantir un débit d'air maximal entre la chambre intérieure 25 du piston 22 et la chambre arrière 18 du servomoteur lorsque le clapet 52 d'admission est ouvert, le tronçon intermédiaire 94 de l'élément tubulaire 76 flottant comporte une pluralité de lumières 142 longitudinales, par exemple trois lumières agencées radialement à 120° les unes des autres, qui sont agencées chacune au droit d'autant de lumières 144 longitudinales du tronçon arrière 23 du piston 22. Le tronçon tubulaire intermédiaire 94 de l'élément 76 tubulaire flottant comporte par ailleurs au moins un doigt 156 intérieur d'immobilisation en rotation qui est monté coulissant dans au moins une desdites lumières 144 du tronçon arrière 23 du piston 22.

L'élément tubulaire 76 flottant comporte enfin un tronçon 108 tubulaire arrière, d'un diamètre inférieur au diamètre du tronçon 94 intermédiaire, qui forme le conduit 108 communiquant avec le milieu extérieur à la pression "Pₐ" et qui est monté coulissant sur au moins un tronçon tubulaire arrière 110 du plongeur 46. Le tronçon tubulaire 110 est avantageusement traversé par la tige 38 de commande.

Pour former le clapet 52 d'admission, une paroi transversale 91 de jonction entre les tronçons intermédiaire 94 et arrière 108 de l'élément 76 tubulaire, agencée sensiblement axialement à proximité du perçage 29 d'extrémité du tronçon tubulaire arrière 23 du piston 22, comporte sur sa face avant 78 le premier élément 82 d'étanchéité du clapet 52 axial d'admission qui est destiné à coopérer avec le second élément 86 d'étanchéité du clapet 52 axial d'admission qui est porté par le plongeur 46 et qui est reçu dans ledit perçage 29 d'extrémité du tronçon 23 tubulaire arrière du piston 22.

Les éléments d'étanchéités des clapets d'amission 52 et de rééquilibrage 50 peuvent être réalisés de diverses manières connues propres à garantir une parfaite étanchéité des clapets 50, 52 quand ils sont fermés.

Toutefois, dans le mode de réalisation préféré de l'invention, le premier élément 82 d'étanchéité du clapet 52 axial d'admission est constitué d'une partie annulaire de la face avant 78 de la paroi 91 transversale de jonction entre les tronçons intermédiaire 94 et arrière 108 de l'élément tubulaire 76.

Le second élément 86 transversal complémentaire d'étanchéité du clapet 52 axial d'admission, qui est agencé en regard de cette partie annulaire 82, est constitué d'un joint annulaire qui est porté par une face arrière 102 annulaire d'une coupelle 104 qui est portée par le plongeur 46 et qui est reçue avec jeu dans le perçage 29 d'extrémité de la chambre 25 du piston 26 tubulaire.

Dans le mode de réalisation préféré de l'invention, la coupelle 104 est interposée entre un tronçon avant 111 et le tronçon 110 arrière du plongeur 46 avec lesquels elle est venue de matière, mais cette disposition n'est pas limitative de l'invention. La coupelle 104 pourrait notamment être une coupelle rapportée sertie sur le corps du plongeur 46.

De préférence, le joint annulaire 86 est reçu dans une gorge de la face arrière 102 de la coupelle 104 dans laquelle il est par exemple collé.

Pour garantir une parfaite étanchéité entre la chambre arrière 18 et le milieu extérieur à la pression "Pₐ" lorsque le clapet 52 d'admission est fermé, un joint annulaire 152 est interposé entre un tronçon tubulaire arrière 154 de l'enveloppe 12 et le tronçon 108 tubulaire arrière de l'élément tubulaire 76 flottant pour assurer l'étanchéité entre le milieu extérieur et la chambre arrière 18 du servomoteur 11.

Le premier élément 84 d'étanchéité du clapet 50 axial de rééquilibrage est constitué d'un joint 84 annulaire qui est reçu dans une gorge 85 pratiquée dans la face avant libre du tronçon 100 tubulaire d'extrémité avant de l'élément 76 tubulaire. Le joint 84 est par exemple emboîté dans la gorge 85.

Le second élément 88 transversal complémentaire d'étanchéité du clapet axial de rééquilibrage est constitué d'une portion annulaire de la face arrière 90 délimitant les tronçons avant 21 et arrière 23 du piston tubulaire 22.

Pour former des conduits 106 de rééquilibrage propres à garantir un débit d'air maximal, le tronçon avant 21 du piston 22 comporte une pluralité des perçages 106 qui sont répartis angulairement de manière régulière au travers dudit tronçon avant 21 qui débouchent dans la face arrière 90 délimitant les tronçons avant 21 et arrière 23 du piston 22 tubulaire. Cette configuration garantit un débit d'air maximal lors du rééquilibrage des chambres avant 16 et arrière 18.

Comme on le verra dans la suite de la présente description, l'élément 76 tubulaire est rappelé dans des positions de repos, de saturation et d'équilibre du servomoteur 11 contre le piston 22 de manière que le clapet de rééquilibrage 50 demeure fermé, ceci afin de permettre des temps de réaction plus rapides du servomoteur 11 en limitant la durée de la phase de rééquilibrage. A cet effet, une face 120 d'épaulement délimitant le tronçon 100 avant et le tronçon 94 intermédiaire de l'élément 76 tubulaire reçoit en appui l'extrémité d'un ressort 122 de rappel dont l'autre extrémité est en appui sur une face 124 d'épaulement de l'enveloppe 12.

Par ailleurs, le corps du piston 22 comporte un alésage 126 axial interne, qui débouche dans la face avant 26 du piston 22 et dans la chambre intérieure 25 du piston 22. Cet alésage 126 axial interne reçoit l'extrémité 31 de la tige 28 d'actionnement du maître cylindre, qui est conformée sous la forme d'un tulipe 30 d'un diamètre sensiblement égal à celui de l'alésage 126, le disque 32 de réaction, d'un diamètre sensiblement égal à celui de l'alésage 126, et un épaulement 138, d'un diamètre extérieur sensiblement égal à celui de l'alésage 126, d'une douille coulissante 128, qui est traversée par le tronçon avant 111 du plongeur 46. Une face avant 130 de l'épaulement 138, coaxiale à un palpeur 132 fixé à l'extrémité du tronçon avant 11 du plongeur 46, est susceptible, tout comme ledit palpeur 132, de solliciter le disque 32 de réaction.

De cette manière, la tige 28 d'actionnement est susceptible, en fonction de la vitesse d'actionnement de la tige 38 de commande, de transmettre la réaction du maître-cylindre de manière variable pour partie au palpeur 132 et pour partie au piston 22 par l'intermédiaire de l'épaulement 138. Une telle configuration étant largement connue de l'état de la technique et ne faisant pas l'objet de la présente description, elle ne sera pas décrite de manière plus explicite dans la suite de la présente description.

Avantageusement, une paroi transversale 134, formée à l'extrémité de l'alésage axial interne 126, forme d'un côté une butée 136 pour l'épaulement 138 de la douille 128 et reçoit du côté 140 opposé l'extrémité du ressort 150 de rappel dont l'autre extrémité est en appui sur une face avant 151 de la coupelle 104 du plongeur 46. Le ressort 150 de rappel est donc avantageusement reçu dans l'élément 76 tubulaire flottant et de ce fait cette configuration permet, par rapport à un servomoteur conventionnel dans lequel le ressort de rappel de la tige de commande est interposé dans le conduit d'admission axial entre l'enveloppe et la tige de commande, de limiter l'encombrement axial dévolu au ressort de rappel. Le servomoteur 11 est donc d'un encombrement axial d'autant plus réduit.

L'un des avantages principaux de l'invention est que, du fait des formes cylindriques ou tubulaires de la cloison mobile 14, de l'élément tubulaire 76 flottant, de la douille 128 tubulaire intermédiaire, du piston 22, et du plongeur 46, l'écoulement de l'air est favorisé au travers de clapets 50 et 52, ce qui permet de réduire les temps de réponse du servomoteur 11 tout en lui garantissant un fonctionnement silencieux.

Par ailleurs, au moins un de ces éléments, et de préférence la majeure partie de ceux-ci, peut être réalisés par des procédés de découpe et d'emboutissage, ou encore par un procédé de moulage d'un matériau plastique. Cette configuration est particulièrement avantageuse car elle permet de réaliser le servomoteur 11 avec des coûts de fabrication réduits.

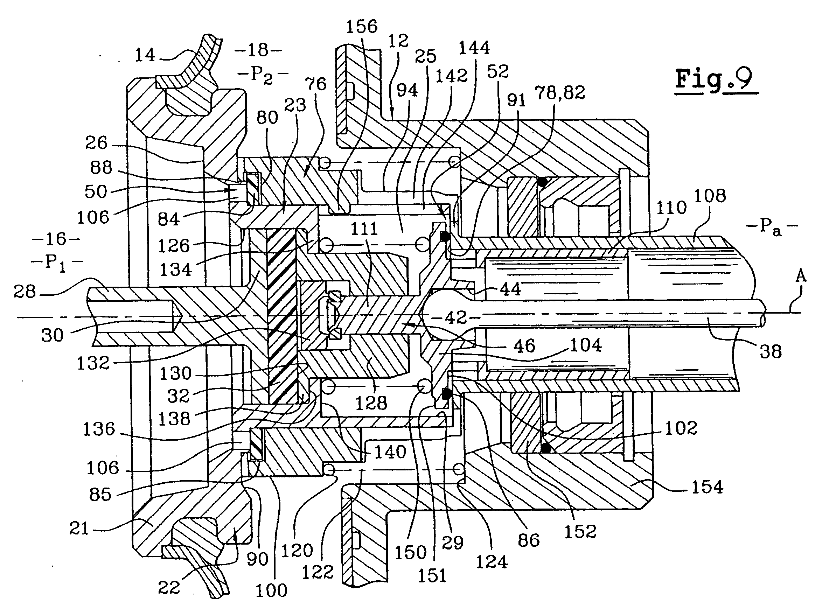

Dans cette configuration, les éléments internes du servomoteur 11 sont susceptibles d'occuper quatre configurations différentes qui ont été représentées aux figures 9 à 11

Comme l'illustre la figure 8 qui représente une position de repos du servomoteur, la tige de commande 38 est susceptible d'occuper une position de repos. Dans cette position, la coupelle 104 du plongeur 46 étant rappelée contre la paroi 91 de l'élément tubulaire 76 par le ressort 150, le clapet 52 d'admission d'air est fermé. Le clapet 50 de rééquilibrage est fermé lui aussi car le tronçon avant 100 de l'élément tubulaire 76 est rappelé contre la face arrière 90 du piston 22.

Initialement, les chambre avant 16 et arrière 18 sont soumises à la même pression "P₁" de dépression. La cloison mobile est donc au repos.

A partir de cette position, une avancée de la tige de commande 38 provoque une décompression du ressort 122 de rappel de l'élément tubulaire jusqu'à une position dite d'équilibre du servomoteur qui a été représentée à la figure 9. La décompression du ressort 122 de rappel de l'élément tubulaire pousse le piston 22 et la paroi mobile 14 vers l'avant et permet un début d'actionnement de la tige 28 de commande du maître cylindre.

Par ailleurs, le ressort 122 étant décomprimé, il ne plaque plus que légèrement la paroi 91 de l'élément tubulaire 76 contre la coupelle 104 du plongeur 46. Les clapets 50 et 52 demeurent toutefois fermés.

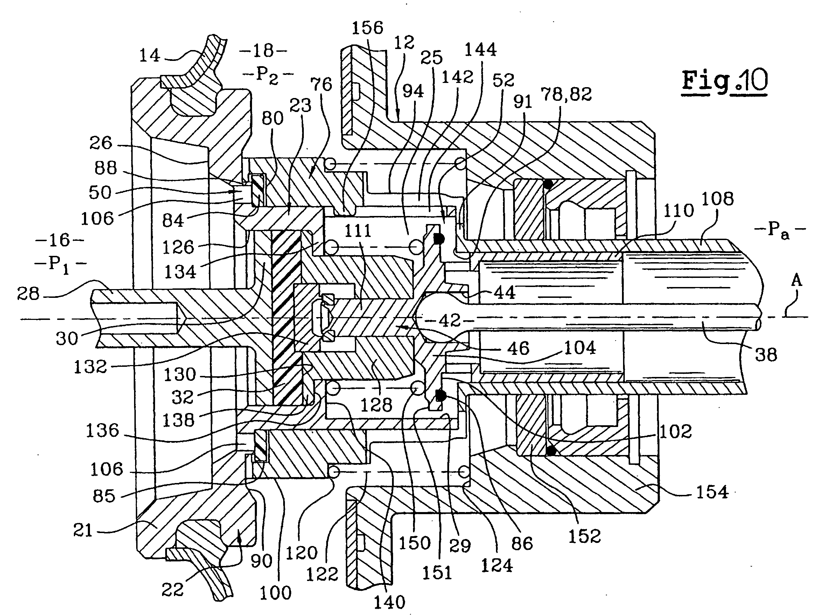

Une avancée de la tige de commande 38 provoque la compression du ressort 150 du rappel du plongeur 46, ce qui permet le décollement de la coupelle 104 de la paroi 91 de l'élément tubulaire 76, et donc l'ouverture du clapet 52 d'admission, comme représenté à la figure 10 qui représente une position dite de saturation du servomoteur. L'air à la pression atmosphérique "Pₐ" pénètre alors dans la chambre intérieure 25 du piston 22 et passe par les lumières 142, 144 pour remplir la chambre 18 arrière, ce qui a pour effet, du fait de la différence de pression entre la chambre arrière 18 et la chambre avant 16, d'actionner la cloison mobile 14 et donc le piston 22 et la tige d'actionnement 28 du maître-cylindre.

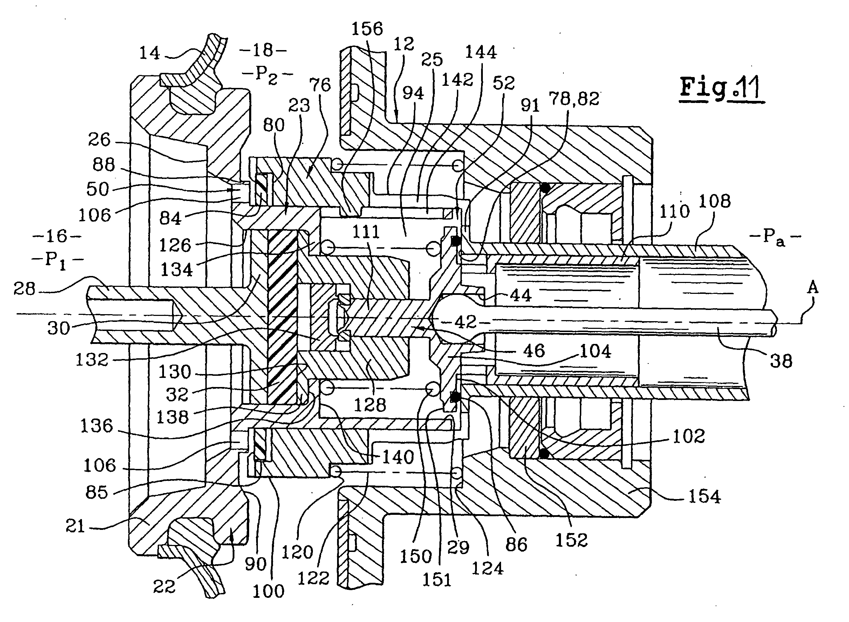

Enfin, si la tige 38 de commande est relâchée, comme représenté à la figure 11 qui illustre une position de retour du servomoteur 11, l'élément tubulaire 76 est rappelé par la coupelle 104, qui est à nouveau en appui sur la paroi 91 dudit élément tubulaire 76, avant même que la différence de pression entre les chambres arrière 18 et avant 16 ne se soit annulée. De ce fait, le tronçon avant 100 de l'élément tubulaire 100 décolle de la face arrière 90 du piston 22, ce qui provoque brièvement l'ouverture du clapet 50 de rééquilibrage. L'air à la pression atmosphérique de la chambre arrière 18 est alors évacué dans la chambre avant 16 et les chambres avant 16 et arrière 18 sont à nouveau soumises à la pression "P₁" de dépression, comme cela a été précédemment représenté à la figure 4.

Le temps de retour du servomoteur 11 en position repos se trouve donc considérablement réduit du fait de la durée réduite de la phase de rééquilibrage des pressions entre les chambres avant 16 et arrière 18.

L'invention permet donc de bénéficier d'un servomoteur bénéficiant d'un temps de réponse réduit et d'un fonctionnement particulièrement silencieux, qui fait de surcroît largement appel à une conception tubulaire emboutie ou moulée, ce qui permet d'assurer sa fabrication à moindre coût.

## Revendications

1. Servomoteur (11) pneumatique d'assistance au freinage pour un véhicule automobile,
du type qui comporte une enveloppe (12) rigide à l'intérieur de laquelle est mobile une cloison (14) transversale délimitant de façon étanche une chambre avant (16), soumise à une première pression (P₁), et une chambre arrière (18) soumise à une deuxième pression (P₂) variant entre la première pression (P₁) et une pression (Pₐ) supérieure à la première pression (P₁), qui est susceptible de solliciter une tige (28) d'actionnement d'un maître cylindre (13) associé au servomoteur (11) par l'intermédiaire d'un disque (32) de réaction,
du type qui comporte un piston (22) mobile tubulaire qui est monté coulissant dans l'enveloppe (12) et qui est solidaire de la cloison (14) mobile,
du type qui comporte une tige (38) de commande se déplaçant dans le piston (22) sélectivement en fonction d'un effort axial d'entrée exercé vers l'avant à l'encontre d'un effort de rappel exercé sur la tige (38) par un ressort (40) de rappel,
du type dans lequel les mouvements de la tige de commande sont susceptibles de déterminer les ouvertures et fermetures d'au moins un clapet (52) axial dit "d'admission" qui est interposé entre une source de pression soumise à la pression (Pₐ) supérieure à la première pression (P₁) et la chambre arrière (18), et d'au moins un clapet axial (50) dit "de rééquilibrage" qui est interposé entre la chambre avant (16) et la chambre arrière (18), pour actionner la cloison (14) mobile,
et du type dans lequel un plongeur (46), traversant la cloison (14) mobile et solidaire de l'extrémité de la tige (38) de commande, est susceptible de solliciter directement la tige (28) d'actionnement du maître-cylindre (13) par l'intermédiaire du disque (32) de réaction,
**caractérisé en ce qu'**il comporte :
- un élément (76) tubulaire flottant, extérieur au plongeur (46), qui est mobile axialement et qui est rappelé élastiquement vers la cloison mobile (14), dont des faces (78,80) transversales décalées axialement comportent des premiers éléments (82, 84) d'étanchéité des clapets axiaux d'admission et de rééquilibrage (50, 52),
- un second élément (86) transversal complémentaire d'étanchéité du clapet (52) axial d'admission, porté par l'extrémité arrière du plongeur (46),
- un second élément (88) transversal complémentaire d'étanchéité du clapet (50) axial de rééquilibrage, constitué d'au moins une portion de la face arrière (90) de la cloison (14) mobile.

2. Servomoteur (11) selon la revendication précédente, **caractérisé en ce que** au moins un premier élément d'étanchéité (82) est constitué d'un joint qui est porté par une douille (92) tubulaire rapportée qui est montée glissante dans l'élément (76) tubulaire flottant.

3. Servomoteur (11) pneumatique selon l'une des revendications précédentes, **caractérisé en ce que** l'élément tubulaire (76) flottant comporte:
- un tronçon (94) intermédiaire tubulaire, qui est monté coulissant dans un tronçon (96) intermédiaire du piston (22) sensiblement cylindrique et autour d'une portée (98) tubulaire de la cloison (14) mobile qui reçoit en coulissement le plongeur (46),
- un tronçon (100) tubulaire d'extrémité avant, d'un diamètre supérieur au diamètre du tronçon (94) intermédiaire, qui est reçu dans un tronçon (102) avant ajouré du piston (22) agencé à la jonction du piston (22) et de la cloison (14) mobile, qui reçoit intérieurement un joint (104) dont une face avant (84) forme le premier élément d'étanchéité du clapet (50) de rééquilibrage, et qui est destiné à coopérer avec la portion (88) de la face arrière (90) de la cloison (14) mobile, formant le second élément d'étanchéité du clapet (50) de rééquilibrage, qui est agencée radialement à l'extérieur d'au moins un perçage (106) de communication entre la chambre (16) avant et la chambre (18) arrière,
- un tronçon (108) tubulaire d'extrémité arrière, d'un diamètre inférieur au diamètre du tronçon (94) intermédiaire, qui reçoit intérieurement la douille (92) tubulaire dont une face (78) transversale d'extrémité avant porte un joint (82), formant le premier élément d'étanchéité du clapet (52) d'admission qui est destiné à coopérer le second élément d'étanchéité porté par le plongeur, et dont un alésage entoure de manière étanche un conduit (112) axial d'admission du piston communiquant avec la source de pression soumise à la pression (Pₐ) supérieure à la première pression (P₁).

4. Servomoteur (11) pneumatique selon la revendication précédente, **caractérisé en ce que** le plongeur (46) est guidé dans une portée (98) tubulaire qui s'étend axialement à partir de la face (90) arrière de la cloison (14) mobile et **en ce que** la cloison (14) mobile comporte une pluralité de perçages (106) répartis angulairement au travers de la cloison (14) transversale autour de la jonction de sa portée (98) tubulaire et de sa face (90) arrière.

5. Servomoteur (11) pneumatique selon l'une des revendications 3 ou 4, **caractérisé en ce qu'**une face (120) d'épaulement délimitant le tronçon (94) tubulaire intermédiaire et le tronçon (108) tubulaire d'extrémité arrière de l'élément (76) tubulaire reçoit en appui l'extrémité d'un ressort (122) de rappel dont l'autre extrémité est en appui sur une face (124) d'épaulement du piston (22) tubulaire.

6. Servomoteur (11) pneumatique selon l'une des revendications précédentes, **caractérisé en ce qu'**une goupille (134) radiale de butée, dont les extrémités ((136) extérieures au piston (22) sont susceptibles de prendre appui sur l'enveloppe (12) du servomoteur (11), traverse un perçage (138) du plongeur (46), deux lumières (140) diamétralement opposées de la portée (98) tubulaire de la cloison (14) mobile, deux lumières (142) diamétralement opposées de l'élément (76), et deux lumières (144) diamétralement opposées du piston (22).

7. Servomoteur (11) pneumatique selon la revendication précédente prise en combinaison avec l'une des revendications 3 à 5, **caractérisé en ce que** les lumières (144) diamétralement opposées du piston font partie des ajourements du piston (22).

8. Servomoteur (11) pneumatique selon l'une des revendications 5 à 7, **caractérisé en ce que** le tronçon intermédiaire (96) du piston, d'un diamètre déterminé, comporte le conduit (112) d'admission, d'un diamètre inférieur au diamètre déterminé, avec lequel il est venu de matière, et **en ce que** le conduit (112) d'admission est lié au tronçon (96) intermédiaire par l'intermédiaire d'une paroi (126) transversale venue de matière dont une face avant forme la face (124) d'épaulement recevant en appui le ressort (122) de rappel de l'élément (76) tubulaire et dont la face arrière forme une face d'épaulement (128) recevant en appui le ressort (40) de rappel de la tige (38) de commande.

9. Servomoteur (11) selon l'une quelconque des revendications précédentes, **caractérisé en ce que** le second élément transversal d'étanchéité du clapet axial d'admission est porté par une coupelle (130) qui est montée serrée sur l'extrémité (132) arrière du plongeur (46) cylindrique et dont une face arrière (86) transversale s'étend en regard du joint (82) formant le premier élément transversal d'étanchéité.

10. Servomoteur (11) selon les revendications 1, 2, 8, et 9 prises en combinaison, **caractérisé en ce que** la cloison (14) mobile, l'élément (76) tubulaire flottant, la douille (92) tubulaire maintenue au contact de l'élément (76) tubulaire flottant par l'action du ressort (122), le piston (22), et la coupelle (130) solidaire du plongeur (46) sont réalisés par des procédés de découpe et d'emboutissage.

11. Servomoteur (11) selon la revendication 1 **caractérisé en ce qu'**il comporte un ressort (150) de rappel interposé axialement dans l'élément (76) tubulaire flottant entre le plongeur (46) et le tronçon arrière (23) du piston (22) tubulaire pour exercer un effort de rappel sur la tige (38) de commande.

12. Servomoteur (11) selon la revendication précédente, **caractérisé en ce que** :
- le clapet (52) axial d'admission est agencé à l'extrémité d'une chambre intérieure (25) du piston tubulaire (22) qui est formée dans le tronçon arrière (23) du piston (22) et qui communique radialement avec la chambre arrière (18), le premier élément (82) transversal d'étanchéité du clapet (52) axial d'admission entourant un conduit (108) d'admission axial qui est formé dans l'élément (76) tubulaire flottant et qui communique avec le milieu extérieur et le second élément (86) transversal complémentaire d'étanchéité du clapet (52) axial d'admission étant reçu avec jeu dans un perçage axial (29) du piston (22) communiquant avec la chambre intérieure (25),
- le clapet (50) axial de rééquilibrage est agencé à l'extérieur du piston (22) tubulaire et il est agencé radialement à l'extérieur d'au moins un conduit (106) de rééquilibrage du piston (22) tubulaire mettant en communication la chambre avant (16) et la chambre arrière (18).

13. Servomoteur (11) selon la revendication précédente, **caractérisé en ce que** l'élément tubulaire (76) flottant comporte :
- un tronçon (100) tubulaire avant, monté coulissant sur le tronçon arrière (23) du piston (22), qui porte le premier élément (84) d'étanchéité du clapet (50) de rééquilibrage, et qui est destiné à coopérer avec le second élément (88) d'étanchéité du clapet (50) de rééquilibrage porté par la portion de la face arrière (90) du tronçon avant (21) du piston (22), les premier et second éléments (84, 88) d'étanchéité du clapet (50) de rééquilibrage étant agencés radialement au moins en partie à l'extérieur d'au moins un perçage (106) de communication entre la chambre (16) avant et la chambre (18) arrière qui traverse le tronçon avant (21) du piston (22),
- un tronçon (94) tubulaire intermédiaire, qui est monté coulissant sur le tronçon (23) arrière du piston (22), et dont au moins une lumière (142) longitudinale est agencée radialement au droit d'au moins une lumière (144) longitudinale du tronçon arrière (23) du piston (22) qui permet la communication entre la chambre intérieure (25) du piston et la chambre arrière (18),
- un tronçon (108) tubulaire arrière, d'un diamètre inférieur au diamètre du tronçon (94) intermédiaire, qui forme le conduit communiquant avec le milieu extérieur et qui est monté coulissant sur au moins un tronçon (110) tubulaire arrière du plongeur (46) traversé par la tige (38) de commande,
et **en ce qu'**une paroi (91) transversale de jonction entre les tronçons (94) intermédiaire et arrière (108) de l'élément (76) tubulaire, agencée sensiblement axialement à proximité du perçage (29) d'extrémité du tronçon (23) tubulaire arrière du piston (22), comporte le premier élément (82) d'étanchéité du clapet (52) axial d'admission qui est destiné à coopérer avec le second élément (86) d'étanchéité du clapet (52) axial d'admission qui est porte par le plongeur (46) et qui est reçu dans ledit perçage (29) d'extrémité du tronçon (23) tubulaire arrière du piston (22).

14. Servomoteur (11) selon la revendication précédente, **caractérisé en ce que** :
- le premier élément (82) d'étanchéité du clapet (52) axial d'admission est constitué d'une partie annulaire de la face avant (78) de la paroi (91) transversale de jonction entre les tronçons intermédiaire (94) et arrière (108) de l'élément tubulaire (76),
- le second élément (86) transversal complémentaire d'étanchéité du clapet (52) axial d'admission est constitué d'un joint annulaire qui est porté par une face arrière (102) annulaire d'une coupelle (104) qui est portée par le plongeur (46) et qui est reçue avec jeu dans le perçage (29) d'extrémité de la chambre (25)du piston tubulaire,
- le premier élément (84) d'étanchéité du clapet (50) axial de rééquilibrage est constitué d'un joint annulaire qui est reçu dans une gorge (85) pratiquée dans la face avant du tronçon (100) tubulaire d'extrémité avant de l'élément (76) tubulaire,
- le second élément (84) transversal complémentaire d'étanchéité du clapet axial de rééquilibrage est constitué d'une portion annulaire de la face arrière (90) délimitant les tronçons avant (21) et arrière (23) du piston tubulaire.

15. Servomoteur (11) selon l'une des revendications 11 à 14, **caractérisé en ce qu'**il comporte une pluralité des perçages (106) qui sont répartis angulairement de manière régulière au travers du tronçon avant (21) du piston (22) et qui débouchent dans la face arrière (90) délimitant les tronçons avant (21) et arrière (23) du piston (22) tubulaire pour former les conduits (106) de rééquilibrage.

16. Servomoteur (11) pneumatique selon l'une quelconque des revendications 11 à 15, **caractérisé en ce que** le corps du piston (22) comporte un alésage (126) axial interne, qui débouche dans la face avant (26) du piston (22) et dans la chambre (25) intérieure du piston (22), et qui reçoit :
- l'extrémité (30) de la tige (28) d'actionnement du maître cylindre,
- le disque (32) de réaction,
- une douille (128) coulissante, traversée par un tronçon (111) avant du plongeur (46), dont un épaulement (138) comporte une face avant (130), qui est coaxiale à un palpeur (132) formé à l'extrémité avant du plongeur (46), pour solliciter le disque (32) de réaction.

17. Servomoteur (11) pneumatique selon la revendication précédente, **caractérisé en ce qu'**une paroi (134) transversale, formée à l'extrémité de l'alésage (126) axial interne, forme d'un côté une butée (136) pour l'épaulement (138) de la douille (128) et reçoit du côté (140) opposé l'extrémité du ressort (150) de rappel dont l'autre extrémité est en appui sur une face avant (151) de la coupelle (104) du plongeur (46).

18. Servomoteur (11) pneumatique selon l'une des revendications 13 à 17, **caractérisé en ce qu'**une face (120) d'épaulement délimitant le tronçon (100) avant et le tronçon (94) intermédiaire de l'élément (76) tubulaire reçoit en appui l'extrémité d'un ressort (122) de rappel dont l'autre extrémité est en appui sur une face (124) d'épaulement de l'enveloppe (12).

19. Servomoteur (11) selon l'une des revendications 14 à 18, **caractérisé en ce que** la coupelle (104) est interposée axialement entre les tronçons arrière (108) et avant (111) du plongeur (46) avec lesquels elle est venue de matière.

20. Servomoteur (11) selon l'une des revendications 13 à 19, **caractérisé en ce qu'**un joint annulaire (152) est interposé entre un tronçon (154) tubulaire arrière de l'enveloppe (12) et le tronçon (108) tubulaire arrière de l'élément (76) tubulaire flottant pour assurer l'étanchéité entre le milieu extérieur et la chambre arrière (18) du servomoteur (11).

21. Servomoteur (11) selon l'une des revendications 13 à 20, **caractérisé en ce que** le tronçon intermédiaire (94) de l'élément (76) tubulaire flottant comporte une pluralité de lumières (142) longitudinales agencées chacune au droit de lumières longitudinales (144) du tronçon arrière (23) du piston (22), et **en ce que** le tronçon tubulaire (94) intermédiaire de l'élément (76) tubulaire flottant comporte au moins un doigt (156) d'immobilisation en rotation qui est monté coulissant dans au moins une desdites lumières (144) du tronçon arrière (23) du piston (22).

22. Servomoteur (11) selon les revendications 11 à 21, **caractérisé en ce que** au moins un élément parmi la cloison (14) mobile, l'élément (76) tubulaire flottant, la douille (128) intermédiaire, le plongeur (46) et le piston (22), est réalisé par des procédés de découpe et d'emboutissage.

23. Servomoteur (11) selon les revendications 11 à 22, **caractérisé en ce que** au moins un élément parmi la cloison (14) mobile, l'élément (76) tubulaire flottant, la douille (128) intermédiaire, le plongeur (46) et le piston (22), est réalisé par un procédé de moulage d'un matériau plastique.

## Patentansprüche

1. Pneumatischer Servomotor (11) zur Bremsunterstützung für ein Kraftfahrzeug,
vom Typ, der ein starres Gehäuse (12) aufweist, in dem eine quer verlaufende Wand (14) beweglich ist, die in dichter Weise eine vordere Kammer (16), die einem ersten Druck (P₁) ausgesetzt ist, und eine hintere Kammer (18) abgrenzt, die einem zweiten Druck (P₂) ausgesetzt ist, welcher zwischen dem ersten Druck (P₁) und einem Druck (Pₐ) variiert, der höher ist als der erste Druck (P₁), und die mittels einer Reaktionsscheibe (32) eine Betätigungsstange (28) eines Hauptzylinders (13), der dem Servomotor (11) zugeordnet ist, beaufschlagen kann,
vom Typ, der einen beweglichen, röhrenförmigen Kolben (22) aufweist, der gleitend in dem Gehäuse (12) angebracht und fest mit der beweglichen Wand (14) verbunden ist,
vom Typ, der eine Steuerstange (38) aufweist, die sich in dem Kolben (22) selektiv in Abhängigkeit von einer axialen Eingangskraft, welche nach vorne ausgeübt wird, entgegen einer durch eine Rückstellfeder (40) auf die Stange (38) ausgeübten Rückstellkraft verschiebt,
vom Typ, bei dem die Bewegungen der Steuerstange die Öffnungs- und Schließvorgänge mindestens eines axialen Ventils (52), genannt "Einlassventil", das zwischen einer Druckquelle, die dem Druck (Pₐ) ausgesetzt ist, welcher höher ist als der erste Druck (P₁), und der hinteren Kammer (18) zwischengeschaltet ist, und mindestens eines axialen Ventils (50), genannt "Ausgleichsventil", das zwischen der vorderen Kammer (16) und der hinteren Kammer (18) zwischengeschaltet ist, bestimmen können, um die bewegliche Wand (14) zu betätigen,
und vom Typ, bei dem ein Tauchkolben (46), der die bewegliche Wand (14) durchquert und fest mit dem Ende der Steuerstange (38) verbunden ist, die Betätigungsstange (28) des Hauptzylinders (13) mittels der Reaktionsscheibe (32) direkt beaufschlagen kann,
**dadurch gekennzeichnet, dass** er folgendes aufweist:
- ein röhrenförmiges, schwimmendes Element (76) außerhalb des Tauchkolbens (46), das axial beweglich ist, elastisch zur beweglichen Wand (14) zurückgestellt ist und bei dem quer verlaufende, axial versetzte Flächen (78, 80) erste Dichtelemente (82, 84) der axialen Ventile (50, 52) für den Einlass und den Ausgleich aufweisen,
- ein zweites, quer verlaufendes, komplementäres Dichtelement (86) des axialen Einlassventils (52), das von dem hinteren Ende des Tauchkolbens (46) getragen ist,
- ein zweites, quer verlaufendes, komplementäres Dichtelement (88) des axialen Ausgleichsventils (50), das mindestens aus einem Teilstück der hinteren Fläche (90) der beweglichen Wand (14) besteht.

2. Servomotor (11) nach dem vorhergehenden Anspruch, **dadurch gekennzeichnet, dass** mindestens ein erstes Dichtelement (82) aus einer Dichtung besteht, die von einer röhrenförmigen, angesetzten Hülse (92) getragen ist, welche gleitend in dem röhrenförmigen, schwimmenden Element (76) angebracht ist.

3. Pneumatischer Servomotor (11) nach einem der vorhergehenden Ansprüche, **dadurch gekennzeichnet, dass** das röhrenförmige, schwimmende Element (76) folgendes aufweist:
- einen röhrenförmigen Zwischenabschnitt (94), der gleitend in einem Zwischenabschnitt (96) des im Wesentlichen zylindrischen Kolbens (22) und um einen röhrenförmigen Bereich (98) der beweglichen Wand (14) angebracht ist, welcher den Tauchkolben (46) gleitend aufnimmt,
- einen röhrenförmigen Abschnitt (100) am vorderen Ende, der einen größeren Durchmesser als der Zwischenabschnitt (94) besitzt, der in einem vorderen, ausgesparten Abschnitt (102) des Kolbens (22) an dem Anschluss zwischen dem Kolben (22) und der beweglichen Wand (14) aufgenommen ist, der innen eine Dichtung (104) aufnimmt, bei der eine vordere Fläche (84) das erste Dichtelement des Ausgleichsventils (50) bildet und die unter Bildung des zweiten Dichtelements des Ausgleichsventils (50) mit dem Teilstück (88) der hinteren Fläche (90) der beweglichen Wand (14) zusammenwirken soll, wobei das Teilstück radial außerhalb mindestens eines Verbindungslochs (106) zwischen der vorderen Kammer (16) und der hinteren Kammer (18) angeordnet ist,
- einen röhrenförmigen Abschnitt (108) am hinteren Ende, der einen kleineren Durchmesser als der Zwischenabschnitt (94) besitzt, der innen die röhrenförmige Hülse (92) aufnimmt, bei der eine quer verlaufende Fläche (78) am vorderen Ende unter Bildung des ersten Dichtelements des Einlassventils (52) eine Dichtung (82) trägt, wobei das erste Dichtelement mit dem zweiten, von dem Tauchkolben getragenen Dichtelement zusammenwirken soll, und bei der eine Bohrung in dichter Weise eine axiale Einlassleitung (112) des Kolbens umgibt, die mit der Druckquelle verbunden ist, welche dem Druck (Pₐ) ausgesetzt ist, der höher ist als der erste Druck (P₁).

4. Pneumatischer Servomotor (11) nach dem vorhergehenden Anspruch, **dadurch gekennzeichnet, dass** der Tauchkolben (46) in einem röhrenförmigen Bereich (98) geführt ist, welcher sich ausgehend von der hinteren Fläche (90) der beweglichen Wand (14) axial erstreckt, und dass die bewegliche Wand (14) mehrere winkelmäßig verteilte Löcher (106) durch die quer verlaufende Wand (14) um den Anschluss zwischen ihrem röhrenförmigen Bereich (98) und ihrer hinteren Fläche (90) aufweist.

5. Pneumatischer Servomotor (11) nach einem der Ansprüche 3 und 4, **dadurch gekennzeichnet, dass** an einer Absatzfläche (120), die den röhrenförmigen Zwischenabschnitt (94) und den röhrenförmigen Abschnitt (108) am hinteren Ende des röhrenförmigen Elements (76) begrenzt, das Ende einer Rückstellfeder (122) anliegt, deren anderes Ende an einer Absatzfläche (124) des röhrenförmigen Kolbens (22) anliegt.

6. Pneumatischer Servomotor (11) nach einem der vorhergehenden Ansprüche, **dadurch gekennzeichnet, dass** ein radialer Anschlagstift (134), dessen Enden (136) außerhalb des Kolbens (22) an dem Gehäuse (12) des Servomotors (11) anliegen können, ein Loch (138) des Tauchkolbens (46), zwei diametral gegenüberliegende Langlöcher (140) des röhrenförmigen Bereichs (98) der beweglichen Wand (14), zwei diametral gegenüberliegende Langlöcher (142) des Elements (76) und zwei diametral gegenüberliegende Langlöcher (144) des Kolbens (22) durchquert.

7. Pneumatischer Servomotor (11) nach dem vorhergehenden Anspruch in Kombination mit einem der Ansprüche 3 bis 5, **dadurch gekennzeichnet, dass** die diametral gegenüberliegenden Langlöcher (144) des Kolbens Teil der Aussparungen des Kolbens (22) sind.

8. Pneumatischer Servomotor (11) nach einem der Ansprüche 5 bis 7, **dadurch gekennzeichnet, dass** der einen bestimmten Durchmesser aufweisende Zwischenabschnitt (96) des Kolbens die Einlassleitung (112) aufweist, die einen kleineren Durchmesser als der bestimmte Durchmesser besitzt und mit der er einstückig ausgebildet ist, und dass die Einlassleitung (112) mit dem Zwischenabschnitt (96) verbunden ist durch eine einstückig ausgebildete, quer verlaufenden Wand (126), bei der eine vordere Fläche die Absatzfläche (124) bildet, an welcher die Rückstellfeder (122) des röhrenförmigen Elements (76) anliegt, und deren hintere Fläche eine Absatzfläche (128) bildet, an welcher die Rückstellfeder (40) der Steuerstange (38) anliegt.

9. Servomotor (11) nach einem der vorhergehenden Ansprüche, **dadurch gekennzeichnet, dass** das zweite, quer verlaufende Dichtelement des axialen Einlassventils von einer Schale (130) getragen ist, welche fest auf dem hinteren Ende (132) des zylindrischen Tauchkolbens (46) angebracht ist und bei der eine hintere, quer verlaufende Fläche (86) sich gegenüber der Dichtung (82), welche das erste, quer verlaufende Dichtelement bildet, erstreckt.

10. Servomotor (11) nach Anspruch 1, 2, 8 und 9 in Kombination, **dadurch gekennzeichnet, dass** die bewegliche Wand (14), das röhrenförmige, schwimmende Element (76), die röhrenförmige Hülse (92), die durch die Wirkung der Feder (122) mit dem röhrenförmigen, schwimmenden Element (76) in Kontakt gehalten ist, der Kolben (22) und die fest mit dem Tauchkolben (46) verbundene Schale (130) durch Stanz- und Tiefziehverfahren realisiert sind.

11. Servomotor (11) nach Anspruch 1, **dadurch gekennzeichnet, dass** er eine Rückstellfeder (150) aufweist, die axial in dem röhrenförmigen, schwimmenden Element (76) zwischen dem Tauchkolben (46) und dem hinteren Abschnitt (23) des röhrenförmigen Kolbens (22) zwischengeschaltet ist, um eine Rückstellkraft auf die Steuerstange (3 8) auszuüben.

12. Servomotor (11) nach dem vorhergehenden Anspruch, **dadurch gekennzeichnet, dass**:
- das axiale Einlassventil (52) am hinteren Ende einer inneren Kammer (25) des röhrenförmigen Kolbens (22) angeordnet ist, welche in dem hinteren Abschnitt (23) des Kolbens (22) gebildet und radial mit der hinteren Kammer (18) verbunden ist, wobei das erste, quer verlaufenden Dichtelement (82) des axialen Einlassventils (52) eine axiale Einlassleitung (108) umgibt, die in dem röhrenförmigen, schwimmenden Element (76) gebildet und mit dem Außenbereich verbunden ist, und wobei das zweite, quer verlaufende, komplementäre Dichtelement (86) des axialen Einlassventils (52) mit einem Spiel in einem axialen Loch (29) des Kolbens (22) aufgenommen ist, welches mit der inneren Kammer (25) verbunden ist,
- das axiale Ausgleichsventil (50) außerhalb des röhrenförmigen Kolbens (22) und radial außerhalb mindestens einer Ausgleichsleitung (106) des röhrenförmigen Kolbens (22) angeordnet ist, welche die vordere Kammer (16) und die hintere Kammer (18) verbindet.

13. Servomotor (11) nach dem vorhergehenden Anspruch, **dadurch gekennzeichnet, dass** das röhrenförmige, schwimmende Element (76) folgendes aufweist:
- einen röhrenförmigen, vorderen Abschnitt (100), der gleitend auf dem hinteren Abschnitt (23) des Kolbens (22) angebracht ist und das erste Dichtelement (84) des Ausgleichsventils (50) trägt, welches mit dem zweiten Dichtelement (88) des Ausgleichsventils (50) zusammenwirken soll, das von dem Teilstück der hinteren Fläche (90) des vorderen Abschnitts (21) des Kolbens (22) getragen ist, wobei das erste und zweite Dichtelement (84, 88) des Ausgleichsventils (50) radial mindestens teilweise außerhalb mindestens eines Verbindungslochs (106) zwischen der vorderen Kammer (16) und der hinteren Kammer (18), das den vorderen Abschnitt (21) des Kolbens (22) durchquert, angeordnet sind,
- einen röhrenförmigen Zwischenabschnitt (94), der gleitend auf dem hinteren Abschnitt (23) des Kolbens (22) angebracht ist und bei dem mindestens ein Langloch (142) radial gegenüber mindestens einem Langloch (144) des hinteren Abschnitts (23) des Kolbens (22) angeordnet ist, der die Verbindung zwischen der inneren Kammer (25) des Kolbens und der hinteren Kammer (18) ermöglicht,
- einen röhrenförmigen, hinteren Abschnitt (108), der einen kleineren Durchmesser als der Zwischenabschnitt (94) besitzt, der die mit dem Außenbereich verbundene Leitung bildet und der auf mindestens einem röhrenförmigen, hinteren, von der Steuerstange (38) durchquerten Abschnitt (110) des Tauchkolbens (46) gleitend angebracht ist,
und dass eine quer verlaufende Anschlusswand (91) zwischen dem Zwischenabschnitt (94) und dem hinteren Abschnitt (108) des röhrenförmigen Elements (76), die im Wesentlichen axial nahe an dem Endloch (29) des röhrenförmigen, hinteren Abschnitts (23) des Kolbens (22) angeordnet ist, das erste Dichtelement (82) des axialen Einlassventils (52) aufweist, das mit dem zweiten Dichtelement (86) des axialen Einlassventils (52) zusammenwirken soll, das von dem Tauchkolben (46) getragen und in dem Endloch (29) des röhrenförmigen, hinteren Abschnitts (23) des Kolbens (22) aufgenommen ist.

14. Servomotor (11) nach dem vorhergehenden Anspruch, **dadurch gekennzeichnet, dass**:
- das erste Dichtelement (82) des axialen Einlassventils (52) aus einem ringförmigen Teil der vorderen Fläche (78) der quer verlaufenden Anschlusswand (91) zwischen dem Zwischenabschnitt (94) und dem hinteren Abschnitt (108) des röhrenförmigen Elements (76) besteht,
- das zweite, quer verlaufende, komplementäre Dichtelement (86) des axialen Einlassventils (52) aus einer ringförmigen Dichtung besteht, die von einer ringförmigen, hinteren Fläche (102) einer Schale (104) getragen ist, welche von dem Tauchkolben (46) getragen und mit Spiel in dem Endloch (29) der Kammer (25) des röhrenförmigen Kolbens aufgenommen ist,
- das erste Dichtelement (84) des axialen Ausgleichsventils (50) aus einer ringförmigen Dichtung besteht, die in einer Nut (85) aufgenommen ist, die in der vorderen Fläche des röhrenförmigen Abschnitts (100) an dem vorderen Ende des röhrenförmigen Elements (76) ausgebildet ist,
- das zweite, quer verlaufende, komplementäre Dichtelement (84) des axialen Ausgleichsventils aus einem ringförmigen Teilstück der hinteren Fläche (90) besteht, die den vorderen (21) und hinteren (23) Abschnitt des röhrenförmigen Kolbens begrenzt.

15. Servomotor (11) nach einem der Ansprüche 11 bis 14, **dadurch gekennzeichnet, dass** er mehrere Löcher (106) aufweist, die winkelmäßig in gleichmäßiger Weise durch den vorderen Abschnitt (21) des Kolbens (22) verteilt sind und die in die hintere Fläche (90) münden, welche den vorderen (21) und hinteren (23) Abschnitt des röhrenförmigen Kolbens (22) begrenzt, um die Ausgleichsleitungen (106) zu bilden.

16. Pneumatischer Servomotor (11) nach einem der Ansprüche 11 bis 15, **dadurch gekennzeichnet, dass** der Körper des Kolbens (22) eine axiale, innere Bohrung (126) aufweist, die in die vordere Fläche (26) des Kolbens (22) und in die innere Kammer (25) des Kolbens (22) mündet, und er folgendes aufnimmt:
- das Ende (30) der Betätigungsstange (28) des Hauptzylinders,
- die Reaktionsscheibe (32),
- eine gleitende Hülse (128), die von einem vorderen Abschnitt (111) des Tauchkolbens (46) durchquert ist und bei der ein Absatz (138) eine vordere Fläche (130) aufweist, die koaxial zu einem Taster (132) ist, der an dem vorderen Ende des Tauchkolbens (46) gebildet ist, um die Reaktionsscheibe (32) zu beaufschlagen.

17. Pneumatischer Servomotor (11) nach dem vorhergehenden Anspruch, **dadurch gekennzeichnet, dass** eine quer verlaufende Wand (134), die am Ende der axialen, inneren Bohrung (126) gebildet ist, an einer Seite einen Anschlag (136) für den Absatz (138) der Hülse (128) bildet und an der gegenüberliegenden Seite (140) das Ende der Rückstellfeder (150) aufnimmt, deren anderes Ende an einer vorderen Fläche (151) der Schale (104) des Tauchkolbens (46) anliegt.

18. Pneumatischer Servomotor (11) nach einem der Ansprüche 13 bis 17, **dadurch gekennzeichnet, dass** an einer Absatzfläche (120), die den vorderen Abschnitt (100) und den Zwischenabschnitt (94) des röhrenförmigen Elements (76) begrenzt, das Ende einer Rückstellfeder (122) anliegt, deren anderes Ende an einer Absatzfläche (124) des Gehäuses (12) anliegt.

19. Servomotor (11) nach einem der Ansprüche 14 bis 18, **dadurch gekennzeichnet, dass** die Schale (104) axial zwischen dem hinteren (108) und dem vorderen (111) Abschnitt des Tauchkolbens (46) zwischengeschaltet ist, mit denen sie einstückig ausgebildet ist.

20. Servomotor (11) nach einem der Ansprüche 13 bis 19, **dadurch gekennzeichnet, dass** eine ringförmige Dichtung (152) zwischen einem röhrenförmigen, hinteren Abschnitt (154) des Gehäuses (12) und dem röhrenförmigen, hinteren Abschnitt (108) des röhrenförmigen, schwimmenden Elements (76) zwischengeschaltet ist, um die Dichtigkeit zwischen dem Außenbereich und der hinteren Kammer (18) des Servomotors (11) zu gewährleisten.

21. Servomotor (11) nach einem der Ansprüche 13 bis 20, **dadurch gekennzeichnet, dass** der Zwischenabschnitt (94) des röhrenförmigen, schwimmenden Elements (76) mehrere Langlöcher (142) aufweist, die jeweils gegenüber von Langlöchern (144) des hinteren Abschnitts (23) des Kolbens (22) angeordnet sind, und dass der röhrenförmige Zwischenabschnitt (94) des röhrenförmigen, schwimmenden Elements (76) mindestens einen Finger (156) zum Verhindern einer Drehung aufweist, der gleitend in mindestens einem der Langlöcher (144) des hinteren Abschnitts (23) des Kolbens (22) angebracht ist.

22. Servomotor (11) nach den Ansprüchen 11 bis 21, **dadurch gekennzeichnet, dass** mindestens die bewegliche Wand (14), das röhrenförmige, schwimmende Element (76), die Zwischenhülse (128), der Tauchkolben (46) oder der Kolben (22) durch Stanz- und Tiefziehverfahren realisiert ist.

23. Servomotor (11) nach den Ansprüchen 11 bis 22, **dadurch gekennzeichnet, dass** mindestens die bewegliche Wand (14), das röhrenförmige, schwimmende Element (76), die Zwischenhülse (128), der Tauchkolben (46) oder der Kolben (22) durch ein Formverfahren aus einem Kunststoffmaterial realisiert ist.

## Claims

1. Pneumatic brake booster (11) for a motor vehicle, of the type comprising a rigid casing (12) inside which there can move a transverse partition (14) sealingly delimiting a front chamber (16), subjected to a first pressure (P₁), and a rear chamber (18) subjected to a second pressure (P₂) that varies between the first pressure (P₁) and a pressure (Pₐ) higher than the first pressure (P₁), which is able to act on an actuating rod (28) of a master cylinder (13) associated with the booster (11) by way of a reaction disk (32),
of the type which comprises a tubular moving piston (22) which is slideably mounted in the casing (12) and which is secured to the moving partition (14),
of the type which comprises a control rod (38) moving in the piston (22) selectively according to an axial input force exerted forward against the action of a return force exerted on the rod (38) via a return spring (40),
of the type in which the movements of the control rod are able to determine the openings and closings of at least one axial intake valve (52) which is inserted between a pressure source subjected to the pressure (Pₐ) higher than the first pressure (P₁) and the rear chamber (18), and of at least one axial equalizing valve (50) which is inserted between the front chamber (16) and the rear chamber (18), to actuate the moving partition (14),
and of the type in which a plunger (46), passing through the moving partition (14) and secured to the end of the control rod (38), is able to act directly upon the actuating rod (28) of the master cylinder (13) by way of the reaction disk (32),
**characterized in that** it comprises:
- a floating tubular element (76) external to the plunger (46), which is axially mobile and which is elastically returned toward the moving partition (14), of which axially offset transverse faces (78, 80) have first sealing elements (82, 84) for the axial intake and equalizing valves (50, 52),
- a complementary transverse second sealing element (86) for the axial intake valve (52), borne by the rear end of the plunger (46),
- a complementary transverse second sealing element (88) for the axial equalizing valve (50), consisting of at least one portion of the rear face (90) of the moving partition (14).

2. Booster (11) according to the preceding claim, **characterized in that** at least a first sealing element (82) consists of a seal borne by an attached tubular bushing (92) slideably mounted in the floating tubular element (76).

3. Pneumatic booster (11) according to one of the preceding claims, **characterized in that** the floating tubular element (76) comprises:
- a tubular intermediate section (94), which is slideably mounted in an intermediate section (96) of the piston (22) which is roughly cylindrical and around a tubular bearing surface (98) of the moving partition (14) which slideably houses the plunger (46),
- a tubular front end section (100) of a diameter greater than the diameter of the intermediate section (94), which is housed in a perforated front section (102) of the piston (22) lying where the piston (22) and the moving partition (14) meet, which internally houses a seal (104) of which a front face (84) forms the first sealing element for the equalizing valve (50) and which is intended to collaborate with that portion (88) of the rear face (90) of the moving partition (14) forming the second sealing element for the equalizing valve (50) which is arranged radially on the outside of at least one drilling (106) providing communication between the front chamber (16) and the rear chamber (18),
- a tubular rear end section (108), of a diameter smaller than the diameter of the intermediate section (94), which internally houses the tubular bushing (92) of which a transverse front end face (78) bears a seal (82) forming the first sealing element for the intake valve (52) which is intended to collaborate with the second sealing element borne by the plunger, and of which a bore sealingly surrounds an axial inlet take duct (112) in the piston communicating with the pressure source subjected to the pressure (Pₐ) greater than the first pressure (P₁).

4. Pneumatic booster (11) according to the preceding claim, **characterized in that** the plunger (46) is guided in a tubular bearing surface (98) which extends axially from the rear face (90) of the moving partition (14) and **in that** the moving partition (14) comprises a plurality of drillings (106) distributed angularly through the transverse partition (14) around the region when its tubular bearing surface (98) and its rear face (90) meet.

5. Pneumatic booster (11) according to one of Claims 3 and 4, **characterized in that** a stepped face (120) delimiting the tubular intermediate section (94) and the tubular rear end section (108) of the tubular element (76) has, bearing against it, the end of a return spring (122) the other end of which bears against a stepped face (124) of the tubular piston (22).

6. Pneumatic booster (11) according to one of the preceding claims, **characterized in that** radial stop pin (134), of which the ends (136) external to the piston (22) are able to bear against the casing (12) of the booster (11), passes through a drilling (138) in the plunger (46), through two diametrically opposed slots (140) in the tubular bearing surface (98) of the moving partition (14), through two diametrically opposed slots (142) in the element (76), and through two diametrically opposed slots (144) in the piston (22).

7. Pneumatic booster (11) according to the preceding claim taken in combination with one of Claims 3 to 5, **characterized in that** the diametrically opposed slots (144) in the piston form part of the perforations in the piston (22).

8. Pneumatic booster (11) according to one of Claims 5 to 7, **characterized in that** the intermediate section (96) of the piston, of a determined diameter, includes the intake duct (112), of a diameter smaller than the determined diameter, with which it is integrally formed, and **in that** the intake duct (112) is connected to the intermediate section (96) by way of a transverse wall (126) formed integrally and a front face of which forms the stepped face (124) against which the return spring (122) of the tubular element (76) bears and the rear face of which forms a stepped face (128) against which the return spring (40) of the control rod (38) bears.

9. Booster (11) according to any one of the preceding claims, **characterized in that** the transverse second sealing element for the axial intake valve is borne by a cup (130) mounted tightly on the rear end (132) of the cylindrical plunger (46) and a transverse rear face (86) of which extends opposite the seal (82) forming the transverse first sealing element.

10. Booster (11) according to Claims 1, 2, 8 and 9 taken in combination, **characterized in that** the moving partition (14), the floating tubular element (76), the tubular bushing (92) kept in contact with the floating tubular element (76) by the action of the spring (122), the piston (22) and the cup (130) secured to the plunger (46) are produced using cutting and pressing methods.

11. Booster (11) according to Claim 1, **characterized in that** it comprises a return spring (150) inserted axially into the floating tubular element (76) between the plunger (46) and the rear section (23) of the tubular piston (22) so as to exert a return force on the control rod (38).

12. Booster (11) according to the preceding claim, **characterized in that**:
- the axial intake valve (52) is arranged at the end of an interior chamber (25) of the tubular piston (22) which chamber is formed in the rear section (23) of the piston (22) and communicates radially with the rear chamber (18), the transverse first sealing element (82) for the axial intake valve (52) surrounding an axial intake duct (108) which is formed in the floating tubular element (76) and which communicates with the external surroundings and the complementary transverse second element (86) for sealing the axial intake valve (52) being received with clearance in an axial drilling (29) in the piston (22) communicating with the interior chamber (25),
- the axial equalizing valve (50) is arranged on the outside of the tubular piston (22) and is arranged radially on the outside of at least one equalizing duct (106) of the tubular piston (22) placing the front chamber (16) and the rear chamber (18) in communication.

13. Booster (11) according to the preceding claim, **characterized in that** the floating tubular element (76) comprises:
- a tubular front section (100), slideably mounted on the rear section (23) of the piston (22), which bears the first sealing element (84) for the equalizing valve (50), and which is intended to collaborate with the second sealing element (88) of the equalizing valve (50) borne by the portion of the rear face (90) of the front section (21) of the piston (22), the first and second sealing elements (84, 88) for sealing the equalizing valve (50) being arranged radially at least in part on the outside of at least one drilling (106) providing communication between the front chamber (16) and the rear chamber (18) which passes through the front section (21) of the piston (22),
- a tubular intermediate section (94) which is slideably mounted on the rear section (23) of the piston (22), and of which at least one longitudinal slot (142) is formed radially in line with at least one longitudinal slot (144) in the rear section (23) of the piston (22) which allows communication between the interior chamber (25) of the piston and the rear chamber (18),
- a tubular rear section (108), of a diameter smaller than the diameter of the intermediate section (94), which forms the duct communicating with the external surroundings and which is slideably mounted on at least one tubular rear section (110) of the plunger (46) through which the control rod (38) passes,
and **in that** a transverse joining wall (91) joining the intermediate (94) and rear (108) sections of the tubular element (76), and arranged more or less axially near the drilling (29) in the end of the tubular rear section (23) of the piston (22), comprises the first sealing element (82) for the axial intake valve (52) which is intended to collaborate with the second sealing element (86) for the axial intake valve (52) which is borne by the plunger (46) and which is housed in the said end drilling (29) of the tubular rear section (23) of the piston (22).

14. Booster (11) according to the preceding claim, **characterized in that**:
- the first sealing element (82) for the axial intake valve (52) consists of an annular part of the front face (78) of the transverse wall (91) joining the intermediate (94) and rear (108) sections of the tubular element (76),
- the complementary transverse second sealing element (86) for the axial intake valve (52) consists of an annular seal borne by an annular rear face (102) of a cup (104) carried by the plunger (46) and which is housed with clearance in the end drilling (29) of the chamber (25) of the tubular piston,
- the first sealing element (84) for the axial equalizing valve (50) consists of an annular seal which is housed in a groove (85) made in the front face of the tubular front end section (100) of the tubular element (76),
- the complementary transverse second sealing element (84) for the axial equalizing valve consists of an annular portion of the rear face (90) delimiting the front (21) and rear (23) sections of the tubular piston.

15. Booster (11) according to one of Claims 11 to 14, **characterized in that** it comprises a plurality of drillings (106) which are angularly distributed in a uniform manner through the front section (21) of the piston (22) and which open into the rear face (90) delimiting the front (21) and rear (23) sections of the tubular piston (22) to form the equalizing ducts (106).

16. Pneumatic booster (11) according to any one of Claims 11 to 15, **characterized in that** the body of the piston (22) has an internal axial bore (126) which opens into the front face (26) of the piston (22) and into the interior chamber (25) of the piston (22) and which houses:
- the end (30) of the actuating rod (28) of the master cylinder,
- the reaction disk (32),
- a sliding bushing (128), through which there passes a front section (111) of the plunger (46), of which a step (138) constitutes a front face (130) coaxial with a feeler (132) formed at the front end of the plunger (46) to act upon the reaction disk (32).

17. Pneumatic booster (11) according to the preceding claim, **characterized in that** a transverse wall (134), formed at the end of the internal axial bore (126), forms, on the one hand, an end stop (136) for the step (138) of the bushing (128) and, on the opposite side (140) receives the end of the return spring (150) the other end of which rests against a front face (151) of the cup (104) of the plunger (46).

18. Pneumatic booster (11) according to one of Claims 13 to 17, **characterized in that** a stepped face (120) delimiting the front section (100) and the intermediate section (94) of the tubular element (76) has, bearing against it, the end of a return spring (122) the other end of which bears against a stepped face (124) of the casing (12).

19. Booster (11) according to one of Claims 14 to 18, **characterized in that** the cup (104) is inserted axially between the rear (108) and front (111) sections of the plunger (46) with which it is integral.

20. Booster (11) according to one of Claims 13 to 19, **characterized in that** an annular seal (152) is inserted between a tubular rear section (154) of the casing (12) and the tubular rear section (108) of the floating tubular element (76), so as to provide a seal between the external surroundings and the rear chamber (18) of the booster (11).

21. Booster (11) according to one of Claims 13 to 20, **characterized in that** the intermediate section (94) of the floating tubular element (76) has a plurality of longitudinal slots (142) each arranged in line with longitudinal slots (144) in the rear section (23) of the piston (22), and **in that** the intermediate tubular section (94) of the floating tubular element (76) has at least one rotation-proofing finger (156) which is slideably mounted in at least one of the said slots (144) in the rear section (23) of the piston (22).

22. Booster (11) according to Claims 11 to 21, **characterized in that** at least one element out of the moving partition (14), the floating tubular element (76), the intermediate bushing (128), the plunger (46) and the piston (22), is produced using cutting and pressing methods.

23. Booster (11) according to Claims 11 to 22, **characterized in that** at least one element out of the moving partition (14), the floating tubular element (76), the intermediate bushing (128), the plunger (46) and the piston (22), is made using a method of molding a plastic.
